# EUROPEAN PATENT APPLICATION

(11) **EP 4 266 746 A1**
(43) Date of publication of application: **25.10.2023**
(21) Application number: 21918514.7
(22) Date of filing: 15.01.2021
(51) Int. Cl.: H04W 36/00

(54) **DATA TRANSMISSION METHOD AND APPARATUS**

(71) Applicant: Huawei Technologies Co., Ltd., Shenzhen, Guangdong 518129 (CN)
(72) Inventor: HU, Xingxing, Shenzhen, Guangdong 518129 (CN); GENG, Tingting, Shenzhen, Guangdong 518129 (CN)
(74) Representative: Isarpatent
(86) International application number: PCT/CN2021/072005
(87) International publication number: WO 2022/151306

(57) **Abstract**

This application provides a data transmission method and an apparatus. The method may include: configuring a conditional candidate primary secondary cell group cell PSCell addition or change for a terminal device; and performing, by a master network device, early data transmission oriented to a network device to which a candidate PSCell belongs, and for example, before the terminal device accesses the candidate PSCell, sending a data packet to the network device to which the candidate PSCell belongs, where a form of the data packet is a packet data convergence protocol protocol data unit, and the data packet includes a data packet on an MN terminated secondary cell group bearer and/or a data packet on an MN terminated split bearer. In this way, after the terminal device accesses a candidate network device, the candidate network device may send forwarded data to the terminal device, to reduce a data transmission delay. In addition, this application can support early data forwarding of the data packet on the MN terminated secondary cell group bearer and/or the data packet on the MN terminated split bearer, so that a transmission delay of data on these bearers can be reduced.

## Description

### TECHNICAL FIELD

This application relates to the field of communication technologies, and more specifically, to a data transmission method and an apparatus.

### BACKGROUND

In a conditional primary secondary cell group cell (primary secondary cell group cell, PSCell) addition or change (conditional PSCell addition/change, CPAC), when one candidate PSCell in one or more candidate PSCells meets a condition corresponding to the candidate PSCell, a terminal device may directly access the candidate PSCell that meets the condition, so that a delay for a PSCell addition or change can be reduced.

However, after the terminal device accesses the candidate PSCell, data can be sent to the terminal device only after a device that is before a handover sends data packets to the candidate PSCell. This increases a transmission delay of these data packets.

### SUMMARY

This application provides a data transmission method and an apparatus, to reduce a data transmission delay.

According to a first aspect, a data transmission method is provided. The method may be performed by a network device, or may be performed by a chip or a circuit used in the network device. This is not limited in this application. For ease of description, an example in which the method is performed by the network device is used below for description.

The method may include: configuring a conditional candidate primary secondary cell group cell PSCell addition or change for a terminal device; and performing early data transmission oriented to a network device to which a candidate PSCell belongs, where the early data transmission is sending, before the terminal device accesses the candidate PSCell, one or more data packets to the network device to which the candidate PSCell belongs, and a form of the data packet is a packet data convergence protocol protocol data unit, where the one or more data packets include a data packet on a master base station MN terminated secondary cell group bearer configured for the terminal device and/or a data packet on an MN terminated split bearer configured for the terminal device.

The method may be performed by a master network device (for example, a master node (master node, MN) (or referred to as a master base station)), or may be performed by a chip or a circuit used in the master network device.

For the MN terminated secondary cell group bearer (secondary cell group bearer, SCG bearer) or the MN terminated split bearer (split bearer), the early data transmission may also be referred to as early data forwarding, or may have another name. A name of the early data transmission does not limit the protection scope of embodiments of this application.

According to the foregoing technical solution, early data forwarding may be performed between the master network device and a candidate network device (for example, a candidate secondary node (secondary node, SN)). In this way, after the terminal device accesses the candidate network device, the candidate network device may send, to the terminal device, data that has been forwarded to the candidate network device, to reduce a data transmission delay.

In addition, for the MN terminated secondary cell group bearer and/or the MN terminated split bearer, the MN may also perform early data transmission oriented to the candidate network device, for example, perform early data forwarding in a form of the packet data convergence protocol (packet data convergence protocol, PDCP) protocol data unit (protocol data unit, PDU) (PDCP PDU). Therefore, this embodiment of this application can support the early data forwarding of the data packet on the MN terminated secondary cell group bearer and/or the data packet on the MN terminated split bearer, so that a transmission delay of data on these bearers can be reduced.

With reference to the first aspect, in some implementations of the first aspect, the method further includes: sending first indication information to the network device to which the candidate PSCell belongs, where the first indication information indicates to perform early data transmission on the MN terminated secondary cell group bearer and/or the MN terminated split bearer.

In a possible manner, the first indication information may be sent through a control plane interface between the master network device and the candidate network device (for example, the MN and the candidate SN), or may be sent through a user plane interface between the master network device and the candidate network device.

With reference to the first aspect, in some implementations of the first aspect, the method further includes: sending second indication information to the network device to which the candidate PSCell belongs, where the second indication information indicates to discard or ignore a part or all of the one or more data packets.

According to the foregoing technical solution, the master network device may send the second indication information to the candidate network device, to indicate to discard or ignore the part or all of the data packets in the early data transmission. This manner can avoid a case in which the candidate network device reserves or repeatedly sends, to the terminal device, some data packets that have been successfully received by the terminal device, to reduce a resource waste.

With reference to the first aspect, in some implementations of the first aspect, the second indication information includes information about one or more sequence numbers, and the information about the one or more sequence numbers indicates to discard or ignore the part or all of the one or more data packets.

In a possible manner, the second indication information may be one sequence number. It is assumed that the sequence number is denoted as a sequence number #A. For example, the sequence number #A may indicate that the candidate network device needs to discard or ignore data packets whose corresponding sequence numbers are lower than the sequence number #A and that are in previously forwarded data packets (for example, PDCP PDUs). In other words, if the master network device needs to indicate to discard or ignore the data packets whose corresponding sequence numbers are lower than the sequence number #A, the master network device may indicate the sequence number #A to the candidate network device.

In another possible manner, the second indication information may be a plurality of sequence numbers, for example, in a form of a sequence number list. For example, the sequence number list may indicate that the candidate network device needs to discard or ignore data packets that correspond to the sequence numbers in the sequence number list and that are in previously forwarded data packets (for example, PDCP PDUs). In other words, the master network device may indicate the sequence numbers corresponding to the data packets to be discarded or ignored.

With reference to the first aspect, in some implementations of the first aspect, the sequence number is a packet data convergence protocol sequence number or a new radio user plane sequence number.

With reference to the first aspect, in some implementations of the first aspect, the sending second indication information to the network device to which the candidate PSCell belongs includes: when a preset condition is met, sending the second indication information to the network device to which the candidate PSCell belongs.

The preset condition may be a time limitation (for example, periodic sending), may be a data amount limitation (for example, a comparison between a data amount and a threshold or a threshold range), or may be a limitation in another respect.

According to a second aspect, a data transmission method is provided. The method may be performed by a network device, or may be performed by a chip or a circuit used in the network device. This is not limited in this application. For ease of description, an example in which the method is performed by the network device is used below for description.

The method may include: before access of a terminal device, receiving one or more data packets from a master base station MN, where a form of the data packet is a packet data convergence protocol protocol data unit, and the one or more data packets include a data packet on an MN terminated secondary cell group bearer configured for the terminal device and/or a data packet on an MN terminated split bearer configured for the terminal device; and after the access of the terminal device, sending a part or all of the one or more data packets to the terminal device, where a conditional candidate primary secondary cell group cell PSCell addition or change is configured for the terminal device.

The method may be performed by a candidate network device (for example, a candidate SN), or may be performed by a chip or a circuit used in the candidate network device.

According to the foregoing technical solution, early data forwarding may be performed between a master network device and the candidate network device. In this way, after the terminal device accesses the candidate network device, the candidate network device may send, to the terminal device, data that has been forwarded to the candidate network device, to reduce a data transmission delay.

In addition, for the MN terminated secondary cell group bearer and/or the MN terminated split bearer, the MN may also perform early data transmission oriented to the candidate network device, for example, perform early data forwarding in a form of the PDCP PDU. Therefore, this embodiment of this application can support early data forwarding of the data packet on the MN terminated secondary cell group bearer and/or the data packet on the MN terminated split bearer, so that a transmission delay of data on these bearers can be reduced.

With reference to the second aspect, in some implementations of the second aspect, the method further includes: receiving second indication information, where the second indication information indicates to discard or ignore a part or all of the one or more data packets; and the sending a part or all of the one or more data packets to the terminal device includes: sending data to the terminal device based on the one or more data packets and the second indication information.

The foregoing technical solution can avoid a case in which the candidate network device repeatedly sends, to the terminal device, some data packets that have been successfully received by the terminal device, to reduce a resource waste.

With reference to the second aspect, in some implementations of the second aspect, the second indication information includes information about one or more sequence numbers, and the information about the one or more sequence numbers indicates to discard or ignore the part or all of the one or more data packets.

With reference to the second aspect, in some implementations of the second aspect, the sequence number is a packet data convergence protocol sequence number or a new radio user plane sequence number.

With reference to the second aspect, in some implementations of the second aspect, the receiving second indication information includes: periodically receiving the second indication information.

For example, the candidate network device may send the data to the terminal device based on the data in the early data forwarding and last received second indication information.

According to a third aspect, a data transmission method is provided. The method may be performed by a network device, or may be performed by a chip or a circuit used in the network device. This is not limited in this application. For ease of description, an example in which the method is performed by the network device is used below for description.

The method may include: A target network device determines to configure N first network devices for a terminal device, where the N first network devices include a second network device, and N is an integer greater than or equal to 1, where when the second network device is, before the terminal device is handed over from a source network device to the target network device, a candidate network device that is configured for the terminal device and that is in a conditional candidate primary secondary cell group cell PSCell addition or change scenario, after the terminal device is handed over from the source network device to the target network device, the second network device is the candidate network device that is configured for the terminal device and that is in the conditional candidate PSCell addition or change scenario, or the second network device is a network device that provides a service for the terminal device; or when the second network device is, after the terminal device is handed over from a source network device to the target network device, a candidate network device that is configured for the terminal device and that is in a conditional candidate primary secondary cell group cell PSCell addition or change scenario, before the terminal device is handed over from the source network device to the target network device, the second network device is the candidate network device that is configured for the terminal device and that is in the conditional candidate PSCell addition or change scenario, or the second network device is a network device that provides a service for the terminal device. The target network device sends third indication information, where the third indication information indicates to use information related to the terminal device in the second network device.

The method may be performed by the target network device (for example, a target MN or a target SN), or may be performed by a chip or a circuit used in the target network device (for example, the target MN or the target SN).

For example, "before the terminal device is handed over from the source network device to the target network device" may be understood as: before a network device that provides a service for the terminal device changes from the source network device to the target network device, before a candidate network device configured for the terminal device changes from the source network device to the target network device, or before a network device that provides a service for the terminal device or a candidate network device configured for the terminal device changes.

For example, "after the terminal device is handed over from the source network device to the target network device" may be understood as: after the network device that provides the service for the terminal device changes from the source network device to the target network device, after the candidate network device configured for the terminal device changes from the source network device to the target network device, or after the network device that provides the service for the terminal device or the candidate network device configured for the terminal device changes.

According to the foregoing technical solution, in a scenario in which the conditional candidate primary secondary cell group cell PSCell addition or change is configured before and/or after the handover, previously forwarded data may be used when it is determined after the handover that the network device configured for the terminal device includes the network device configured for the terminal device before the handover, to avoid forwarding these data packets again, thereby reducing a transmission delay of these data packets.

With reference to the third aspect, in some implementations of the third aspect, that the target network device sends third indication information includes: The target network device sends the third indication information to the second network device; or the target network device sends the third indication information to the source network device.

In an example, the target network device may send the third indication information to the second network device, to indicate to use or maintain the information related to the terminal device in the second network device. For example, the information related to the terminal device may include but is not limited to a context of the terminal device in the second network device and information related to early data forwarding previously performed by the second network device.

In another example, the target network device may send the third indication information to the source network device. For example, the third indication information may be carried in a handover request response message.

With reference to the third aspect, in some implementations of the third aspect, the method further includes: The target network device receives early data transmission information of the second network device from the source network device.

Therefore, by learning of a status of early data transmission of the second network device, the target network device may perform appropriate processing, for example, not forward a data packet that has been previously forwarded.

For example, the early data transmission information of the second network device may include one or more of the following: data packets on which early data transmission has been performed from the source network device to the candidate second network device and data packets in the early data transmission that are discardable or ignorable by the candidate second network device.

For example, the target network device may notify the second network device of the data packets in the early data transmission that are discardable or ignorable.

With reference to the third aspect, in some implementations of the third aspect, the method further includes: The target network device performs early data transmission with the second network device based on the early data transmission information of the second network device.

With reference to the third aspect, in some implementations of the third aspect, the method further includes: The target network device sends identification information of the second network device to the source network device.

Therefore, the identification information is carried, to learn of one or more network devices that are before the handover and that need to maintain the previously forwarded data. This solution is feasible and simple. In addition, when a plurality of candidate network devices need to maintain the previously forwarded data, identifiers of these candidate network devices are indicated, so that signaling can be reduced, and resources can be saved.

With reference to the third aspect, in some implementations of the third aspect, the method further includes: The target network device receives information about one or more network devices from the source network device, where the one or more network devices include the second network device, and the one or more network devices are a candidate network device that is configured for the terminal device before the terminal device is handed over from the source network device to the target network device and that is in the conditional candidate PSCell addition or change scenario, or are a network device that provides a service for the terminal device; and the information about the one or more network devices includes one or more of the following: identification information of the one or more network devices and identification information of the terminal device in the one or more network devices.

Therefore, using an example in which a CPAC occurs before and after the handover, the target network device may learn, based on information about the candidate network device that is before the handover, whether the candidate network device that is before the handover is the same as a candidate network device that is after the handover. In this way, when the candidate network device that is before the handover is the same as the candidate network device that is after the handover, these data packets are not forwarded again in the early data forwarding, and a transmission delay of these data packets can be reduced.

With reference to the third aspect, in some implementations of the third aspect, the information about the one or more network devices includes the identification information of the one or more network devices, and it is determined, based on the identification information of the one or more network devices, that the N first network devices include the second network device.

Therefore, after the target network device receives the identification information that is sent by the source network device and that is of the network device that provides the service for the terminal device before the handover or the candidate network device (namely, the one or more network devices), the target network device may determine, based on the information, which network devices are to be selected to provide the service for the terminal device, or may determine, based on the information, which candidate network devices are to be selected. In this way, previous early-transmitted data can be reused as much as possible, to reduce the transmission delay, and improve user experience.

With reference to the third aspect, in some implementations of the third aspect, that the target network device receives information about one or more network devices from the source network device includes: The target network device receives a handover request message, where the handover request message includes the information about the one or more network devices.

Therefore, when sending the handover request message to the target network device, the source network device may notify the target network device of the information about the network device (for example, the candidate network device) that is before the handover. Therefore, the target network device may determine, by receiving the handover request message that carries the information about the network device (for example, the candidate network device) that is before the handover, whether a same network device is included both before and after the handover.

With reference to the third aspect, in some implementations of the third aspect, the target network device sends identification information of the terminal device in the second network device to the second network device.

For example, the target network device sends an SN addition request message to the second network device, where the SN addition request message includes the identification information of the terminal device in the second network device.

With reference to the third aspect, in some implementations of the third aspect, the method further includes: The target network device sends information about the N first network devices to the source network device.

For example, the target network device sends identification information of the N first network devices to the source network device.

According to a fourth aspect, a data transmission method is provided. The method may be performed by a network device, or may be performed by a chip or a circuit used in the network device. This is not limited in this application. For ease of description, an example in which the method is performed by the network device is used below for description.

The method may include: A source network device determines that a network device configured for a terminal device after a handover includes a second network device, where when the second network device is, before the terminal device is handed over from the source network device to a target network device, a candidate network device that is configured for the terminal device and that is in a conditional candidate primary secondary cell group cell PSCell addition or change scenario, after the terminal device is handed over from the source network device to the target network device, the second network device is the candidate network device that is configured for the terminal device and that is in the conditional candidate PSCell addition or change scenario, or the second network device is a network device that provides a service for the terminal device; or when the second network device is, after the terminal device is handed over from the source network device to a target network device, a candidate network device that is configured for the terminal device and that is in a conditional candidate primary secondary cell group cell PSCell addition or change scenario, before the terminal device is handed over from the source network device to the target network device, the second network device is the candidate network device that is configured for the terminal device and that is in the conditional candidate PSCell addition or change scenario, or the second network device is a network device that provides a service for the terminal device. The source network device sends third indication information to the second network device, where the third indication information indicates to use information related to the terminal device in the second network device.

The method may be performed by the source network device (for example, a source MN or a source SN), or may be performed by a chip or a circuit used in the source network device (for example, the source MN or the source SN).

For example, the source network device receives a handover request response message, and determines, based on the handover request response message, that the network device configured for the terminal device after the handover includes the second network device.

For example, the third indication information may be carried in a release request message (for example, an SN release request message).

With reference to the fourth aspect, in some implementations of the fourth aspect, that a source network device determines that a network device configured for a terminal device after a handover includes a second network device includes: The source network device receives identification information of the second network device from the target network device. The source network device determines, based on the identification information of the second network device, that the network device configured for the terminal device after the handover includes the second network device.

With reference to the fourth aspect, in some implementations of the fourth aspect, the method further includes: The source network device receives information about N first network devices from the target network device, where the N first network devices are a network device configured by the target network device for the terminal device.

For example, the source network device receives identification information of the N first network devices from the target network device.

For example, the source network device may determine, based on the information about the N first network devices (for example, the identification information of the N first network devices), whether the network device configured for the terminal device after the handover includes a network device configured for the terminal device before the handover. For example, the source network device may determine, based on the information about the N first network devices (for example, the identification information of the N first network devices), that the network device configured for the terminal device after the handover includes the second network device.

With reference to the fourth aspect, in some implementations of the fourth aspect, the method further includes: The source network device sends early data transmission information of the second network device to the target network device.

With reference to the fourth aspect, in some implementations of the fourth aspect, the method further includes: The source network device sends information about one or more network devices to the target network device, where the one or more network devices include the second network device, and the one or more network devices are a candidate network device that is configured for the terminal device before the terminal device is handed over from the source network device to the target network device, and that is in the conditional candidate PSCell addition or change scenario, or are a network device that provides a service for the terminal device; and the information about the one or more network devices includes one or more of the following: identification information of the one or more network devices and identification information of the terminal device in the one or more network devices.

With reference to the fourth aspect, in some implementations of the fourth aspect, that the source network device sends information about one or more network devices to the target network device includes: The source network device sends a handover request message to the target network device, where the handover request message includes the information about the one or more network devices.

With reference to the fourth aspect, in some implementations of the fourth aspect, the method further includes: The source network device sends, to the target network device or the second network device, a data packet to be sent to the terminal device.

According to a fifth aspect, a data transmission method is provided. The method may be performed by a network device, or may be performed by a chip or a circuit used in the network device. This is not limited in this application. For ease of description, an example in which the method is performed by the network device is used below for description.

The method may include: A second network device receives third indication information from a source network device or a target network device, where the third indication information indicates to use information related to a terminal device in the second network device. When the second network device is, before the terminal device is handed over from the source network device to the target network device, a candidate network device that is configured for the terminal device and that is in a conditional candidate primary secondary cell group cell PSCell addition or change scenario, after the terminal device is handed over from the source network device to the target network device, the second network device is the candidate network device that is configured for the terminal device and that is in the conditional candidate PSCell addition or change scenario, or the second network device is a network device that provides a service for the terminal device; or when the second network device is, after the terminal device is handed over from the source network device to the target network device, a candidate network device that is configured for the terminal device and that is in a conditional candidate primary secondary cell group cell PSCell addition or change scenario, before the terminal device is handed over from the source network device to the target network device, the second network device is the candidate network device that is configured for the terminal device and that is in the conditional candidate PSCell addition or change scenario, or the second network device is a network device that provides a service for the terminal device.

The method may be performed by the second network device, or may be performed by a chip or a circuit used in the second network device.

For example, when the second network device receives the third indication information from the source network device, the third indication information may be carried in a release request message (for example, an SN release request message).

For another example, when the second network device receives the third indication information from the target network device, the third indication information may be carried in an addition request message (for example, an SN addition request message).

With reference to the fifth aspect, in some implementations of the fifth aspect, the second network device receives identification information of the terminal device in the second network device from the target network device.

For example, the second network device receives the SN addition request message from the target network device, where the SN addition request message includes the identification information of the terminal device in the second network device.

With reference to the third aspect to the fifth aspect, in some implementations, the information related to the terminal device includes one or more of the following: context information of the terminal device, a data packet of the terminal device that has been transmitted to the second network device, and information about a data packet that is of the terminal device and that is discardable or ignorable by the second network device.

With reference to the third aspect to the fifth aspect, in some implementations, the target network device is a network device in the conditional candidate PSCell addition or change scenario, and the source network device is a network device in the conditional candidate PSCell addition or change scenario. Alternatively, the target network device is a network device in the conditional candidate PSCell addition or change scenario, and the source network device is a network device in a carrier aggregation scenario. Alternatively, the target network device is a network device in a carrier aggregation scenario, and the source network device is a network device in the conditional candidate PSCell addition or change scenario.

According to a sixth aspect, a data transmission method is provided. The method may be performed by a network device, or may be performed by a chip or a circuit used in the network device. This is not limited in this application. For ease of description, an example in which the method is performed by the network device is used below for description.

The method may include: receiving information about a candidate network device configured for a terminal device before the terminal device is handed over from a source network device to a target network device; determining that a network device configured for the terminal device after the terminal device is handed over from the source network device to the target network device includes the candidate network device configured for the terminal device before the handover; and receiving early data transmission information of the candidate network device configured for the terminal device before the terminal device is handed over from the source network device to the target network device.

For example, the candidate network device configured for the terminal device before the terminal device is handed over from the source network device to the target network device is denoted as a second network device. The method may include: receiving information about the second network device; determining that the network device configured for the terminal device after the handover includes the second network device; and receiving early data transmission information of the second network device.

The method may be performed by the target network device (for example, a target MN or a target SN), or may be performed by a chip or a circuit used in the target network device (for example, the target MN or the target SN).

With reference to the sixth aspect, in some implementations of the sixth aspect, the early data transmission information of the candidate network device may include, for example, one or more of the following: data packets on which early data forwarding oriented to the candidate network device has been performed (for example, indicated by a packet data convergence protocol sequence number (packet data convergence protocol sequence number, PDCP SN) or a new radio user plane sequence number (new radio user plane sequence number, NR-U SN)) and data packets in the early data forwarding that are discardable or ignorable by the candidate network device.

With reference to the sixth aspect, in some implementations of the sixth aspect, the method further includes: receiving third indication information, where the third indication information indicates to use information related to the terminal device in the candidate network device configured for the terminal device before the handover.

With reference to the sixth aspect, in some implementations of the sixth aspect, the information related to the terminal device includes one or more of the following: context information of the terminal device, a data packet of the terminal device that has been transmitted to the candidate network device configured for the terminal device before the terminal device is handed over from the source network device to the target network device, and information about a data packet that is of the terminal device and that is discardable or ignorable by the candidate network device configured for the terminal device before the terminal device is handed over from the source network device to the target network device.

With reference to the sixth aspect, in some implementations of the sixth aspect, the method further includes: receiving second indication information, where the second indication information indicates to discard or ignore a part or all of data packets in early data transmission.

With reference to the sixth aspect, in some implementations of the sixth aspect, the second indication information includes information about one or more sequence numbers, and the information about the one or more sequence numbers indicates to discard or ignore the part or all of the data packets in the early data transmission.

With reference to the sixth aspect, in some implementations of the sixth aspect, the sequence number is a packet data convergence protocol sequence number or a new radio user plane sequence number.

With reference to the sixth aspect, in some implementations of the sixth aspect, the early data transmission oriented to the network device configured for the terminal device after the handover is performed based on a status of early data transmission with the candidate network device configured for the terminal device before the handover.

According to a seventh aspect, a data transmission method is provided. The method may be performed by a network device, or may be performed by a chip or a circuit used in the network device. This is not limited in this application. For ease of description, an example in which the method is performed by the network device is used below for description.

The method may include: sending information about a candidate network device configured for a terminal device before the terminal device is handed over from a source network device to a target network device; determining that a network device configured for the terminal device after the terminal device is handed over from the source network device to the target network device includes the candidate network device configured for the terminal device before the handover; and sending early data transmission information of the candidate network device configured for the terminal device before the terminal device is handed over from the source network device to the target network device.

For example, the candidate network device configured for the terminal device before the terminal device is handed over from the source network device to the target network device is denoted as a second network device. The method may include: sending information about the second network device; determining that the network device configured for the terminal device after the terminal device is handed over from the source network device to the target network device includes the second network device; and sending early data transmission information of the second network device.

The method may be performed by the source network device (for example, a source MN or a source SN), or may be performed by a chip or a circuit used in the source network device (for example, the source MN or the source SN).

With reference to the seventh aspect, in some implementations of the seventh aspect, the early data transmission information of the candidate network device may include, for example, one or more of the following: data packets on which early data forwarding oriented to the candidate network device has been performed (for example, indicated by a PDCP SN or an NR-U sequence number) and data packets in the early data forwarding that are discardable or ignorable by the candidate network device.

With reference to the seventh aspect, in some implementations of the seventh aspect, the method further includes: sending third indication information, where the third indication information indicates to use information related to the terminal device in the candidate network device configured for the terminal device before the terminal device is handed over from the source network device to the target network device.

With reference to the seventh aspect, in some implementations of the seventh aspect, the information related to the terminal device includes one or more of the following: context information of the terminal device, a data packet of the terminal device that has been transmitted to the candidate network device configured for the terminal device before the terminal device is handed over from the source network device to the target network device, and information about a data packet that is of the terminal device and that is discardable or ignorable by the candidate network device configured for the terminal device before the terminal device is handed over from the source network device to the target network device.

With reference to the seventh aspect, in some implementations of the seventh aspect, the method further includes: sending second indication information, where the second indication information indicates to discard or ignore a part or all of data packets in early data transmission.

With reference to the seventh aspect, in some implementations of the seventh aspect, the second indication information includes information about one or more sequence numbers, and the information about the one or more sequence numbers indicates to discard or ignore the part or all of the data packets in the early data transmission.

With reference to the seventh aspect, in some implementations of the seventh aspect, the sequence number is a packet data convergence protocol sequence number or a new radio user plane sequence number.

With reference to the seventh aspect, in some implementations of the seventh aspect, the early data transmission oriented to the target network device is performed based on a status of early data transmission with the candidate network device configured for the terminal device before the terminal device is handed over from the source network device to the target network device.

According to an eighth aspect, a data transmission method is provided. The method may be performed by a network device, or may be performed by a chip or a circuit used in the network device. This is not limited in this application. For ease of description, an example in which the method is performed by the network device is used below for description.

The method may include: receiving information about a network device configured for a terminal device before the terminal device is handed over from a source network device to a target network device; determining that a candidate network device configured for the terminal device after the terminal device is handed over from the source network device to the target network device includes the network device configured for the terminal device before the handover; and receiving early data transmission information of the network device configured for the terminal device before the terminal device is handed over from the source network device to the target network device.

For example, the network device configured for the terminal device before the terminal device is handed over from the source network device to the target network device is denoted as a second network device. The method may include: receiving information about the second network device; determining that the candidate network device configured for the terminal device after the terminal device is handed over from the source network device to the target network device includes the second network device; and receiving early data transmission information of the second network device.

The method may be performed by the target network device (for example, a target MN or a target SN), or may be performed by a chip or a circuit used in the target network device (for example, the target MN or the target SN).

According to a ninth aspect, a data transmission method is provided. The method may be performed by a network device, or may be performed by a chip or a circuit used in the network device. This is not limited in this application. For ease of description, an example in which the method is performed by the network device is used below for description.

The method may include: sending information about a network device configured for a terminal device before the terminal device is handed over from a source network device to a target network device; determining that a candidate network device configured for the terminal device after the terminal device is handed over from the source network device to the target network device includes the network device configured for the terminal device before the handover; and sending early data transmission information of the network device configured for the terminal device before the terminal device is handed over from the source network device to the target network device.

For example, the network device configured for the terminal device before the terminal device is handed over from the source network device to the target network device is denoted as a second network device. The method may include: sending information about the second network device; determining that the candidate network device configured for the terminal device after the terminal device is handed over from the source network device to the target network device includes the second network device; and sending early data transmission information of the second network device.

The method may be performed by the source network device (for example, a source MN or a source SN), or may be performed by a chip or a circuit used in the source network device (for example, the source MN or the source SN).

According to a tenth aspect, a communication apparatus is provided. The apparatus is configured to perform the methods according to the first aspect to the ninth aspect. Specifically, the apparatus may include a unit and/or a module, for example, a processing unit and/or a communication unit, configured to perform the methods according to the first aspect to the ninth aspect.

In an implementation, the apparatus is a network device. When the apparatus is the network device, the communication unit may be a transceiver or an input/output interface, and the processing unit may be a processor.

In another implementation, the apparatus is a chip, a chip system, or a circuit used in a network device. When the apparatus is the chip, the chip system, or the circuit used in the communication device, the communication unit may be an input/output interface, an interface circuit, an output circuit, an input circuit, a pin, a related circuit, or the like on the chip, the chip system, or the circuit; and the processing unit may be a processor, a processing circuit, a logic circuit, or the like.

Optionally, the transceiver may be a transceiver circuit. Optionally, the input/output interface may be an input/output circuit.

According to an eleventh aspect, a communication apparatus is provided. The apparatus includes: a memory, configured to store a program; and a processor, configured to execute the program stored in the memory. When the program stored in the memory is executed, the processor is configured to perform the methods according to the first aspect to the ninth aspect.

In an implementation, the apparatus is a terminal device or a network device.

In another implementation, the apparatus is a chip, a chip system, or a circuit used in a terminal device or a network device.

According to a twelfth aspect, this application provides a processor, configured to perform the methods provided in the foregoing aspects. In a process of performing these methods, a process of sending the foregoing information and obtaining/receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the information is output by the processor, other processing may further need to be performed on the information before the information arrives at the transceiver. Similarly, when the processor receives the input information, the transceiver obtains/receives the information, and inputs the information into the processor. Further, after the transceiver receives the foregoing information, other processing may need to be performed on the foregoing information before the information is input into the processor.

According to the foregoing principle, for example, the obtaining the information about the second network device that is before the handover in the foregoing method may be understood as receiving the input information by the processor.

Unless otherwise specified, or if there is no conflict with an actual function or internal logic in related descriptions, operations such as transmission, sending, and obtaining/receiving performed by the processor may be more generally understood as operations such as output, receiving, and input performed by the processor, instead of operations such as transmission, sending, and receiving directly performed by a radio frequency circuit and an antenna.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of configuring the memory and the processor are not limited in embodiments of this application.

According to a thirteenth aspect, a computer-readable storage medium is provided. The computer-readable medium stores program code executed by a device, and the program code is for performing the methods provided in the first aspect to the ninth aspect.

According to a fourteenth aspect, a computer program product including instructions is provided. When the computer program product runs on a computer, the computer is enabled to perform the methods provided in the first aspect to the ninth aspect.

According to a fifteenth aspect, a chip is provided. The chip includes a processor and a communication interface. The processor reads, through the communication interface, instructions stored in a memory, to perform the methods provided in the first aspect to the ninth aspect.

Optionally, in an implementation, the chip may further include the memory. The memory stores the instructions, and the processor is configured to execute the instructions stored in the memory. When the instructions are executed, the processor is configured to perform the methods provided in the first aspect to the ninth aspect.

According to a sixteenth aspect, a communication system is provided, and includes the foregoing master network device and candidate network device.

According to a seventeenth aspect, a communication system is provided, and includes the foregoing source network device and target network device; the foregoing source network device and second network device; the foregoing target network device and second network device; or the foregoing source network device, target network device, and second network device.

### BRIEF DESCRIPTION OF DRAWINGS

FIG. 1 is a schematic diagram of a CU-DU architecture;
FIG. 2 is a schematic diagram of a wireless communication system 200 usable in an embodiment of this application;
FIG. 3 is a schematic diagram of a wireless communication system 300 usable in an embodiment of this application;
FIG. 4 is a schematic diagram of a DC control plane architecture applicable to an embodiment of this application;
FIG. 5 is a schematic diagram of network-side protocol stacks in EN-DC for an MCG bearer, an SCG bearer, and a split bearer;
FIG. 6 is a schematic diagram of network-side protocol stacks in NGEN-DC/NE-DC/NR-DC for an MCG bearer, an SCG bearer, and a split bearer;
FIG. 7 is a schematic diagram of a data transmission method according to an embodiment of this application;
FIG. 8 is a schematic diagram of a data transmission method according to another embodiment of this application;
FIG. 9 is a schematic diagram of a CPA procedure applicable to an embodiment of this application;
FIG. 10 is a schematic diagram of an MN triggered CPC procedure applicable to an embodiment of this application;
FIG. 11 is a schematic diagram of an SN triggered CPC procedure applicable to an embodiment of this application;
FIG. 12 is a schematic flowchart of a scenario in which a CPAC is configured before a handover and then an MN handover occurs and that is applicable to another embodiment of this application;
FIG. 13 is a schematic flowchart of a scenario in which a CPC is configured before a handover and then an SN handover occurs and that is applicable to another embodiment of this application;
FIG. 14 is a schematic flowchart of a scenario in which a CPAC is not configured before a handover and then an MN handover occurs and that is applicable to another embodiment of this application;
FIG. 15 is a schematic block diagram of a data transmission apparatus according to an embodiment of this application;
FIG. 16 is another schematic block diagram of a data transmission apparatus according to an embodiment of this application; and
FIG. 17 is a schematic diagram of a structure of a network device according to an embodiment of this application.

### DESCRIPTION OF EMBODIMENTS

The following describes technical solutions in this application with reference to the accompanying drawings.

The technical solutions in embodiments of this application may be applied to various communication systems, for example, a fifth generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a sixth generation mobile communication system. The technical solutions in embodiments of this application may be further applied to device-to-device (device-to-device, D2D) communication, vehicle-to-everything (vehicle-to-everything, V2X) communication, machine-to-machine (machine-to-machine, M2M) communication, machine-type communications (machine-type communications, MTC), an Internet of things (internet of things, IoT) communication system, or another communication system.

A terminal device in embodiments of this application may also be referred to as a user equipment (user equipment, UE), an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, or a user apparatus. The terminal device in embodiments of this application may be a device that provides a user with voice and/or data connectivity, may be configured to connect a person, an object, and a machine, and for example, may be a handheld device or a vehicle-mounted device that has a wireless connection function. The terminal device in embodiments of this application may be a mobile phone (mobile phone), a tablet computer (Pad), a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like. Optionally, the UE may serve as a base station. For example, the UE may serve as a scheduling entity that provides a sidelink signal between UEs in the V2X or D2D communications. For example, a cellular phone and an automobile communicate with each other by using a sidelink signal. A base station does not need to relay a communication signal for communication between the cellular phone and a smart home device.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that enables the terminal device to access a wireless network. The base station may cover the following names in a broad sense, or may be interchanged with the following names, for example: a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a master eNodeB MeNB, a secondary eNodeB SeNB, a multi-standard radio (MSR) node, a home base station, a network controller, an access node, a wireless node, an access point (AP), a transmission node, a transceiver node, a baseband unit (BBU), a remote radio unit (RRU), an active antenna unit (AAU), a remote radio head (RRH), a central unit (central unit, CU), a distributed unit (distributed unit, DU), and a positioning node. The base station may be a macro base station, a micro base station, a relay node, a donor node, a similar device, or a combination thereof. The base station may alternatively be a communication module, a modem, or a chip that is disposed in the foregoing device or apparatus. Alternatively, the base station may be a mobile switching center, a device that performs a base station function in the device-to-device (Device-to-Device, D2D), the vehicle-to-everything (vehicle-to-everything, V2X), and the machine-to-machine (machine-to-machine, M2M) communication, a network side device in a 6G network, a device that performs the base station function in a future communication system, and the like. The base station may support networks using a same access technology or different access technologies. A specific technology and a specific device form used by the network device are not limited in embodiments of this application.

The base station may be fixed or mobile. For example, a helicopter or an unmanned aerial vehicle may be configured to serve as a mobile base station, and one or more cells may move with a location of the mobile base station. In another example, a helicopter or an unmanned aerial vehicle may be configured as a device that communicates with another base station.

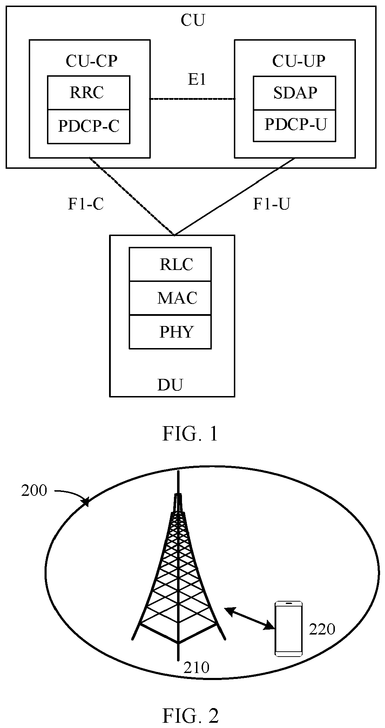

In some deployments, the network device in embodiments of this application may be a CU or a DU, or includes a CU and a DU. A gNB may further include an active antenna unit (active antenna unit, AAU). As an example for description, FIG. 1 is a schematic diagram of a CU-DU architecture. The CU performs a part of functions of the gNB, and the DU performs a part of functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified as a network device in a radio access network (radio access network, RAN), or may be classified as a network device in a core network (core network, CN). This is not limited in this application.

Further, the CU may be divided into a central unit-control plane (central unit-control plane, CU-CP) and a central unit-user plane (central unit-user plane, CU-UP). The CU-CP and the CU-UP may also be deployed on different physical devices. The CU-CP is responsible for a control plane function, and mainly includes the RRC layer and a PDCP-C layer. The PDCP-C layer is mainly responsible for data encryption and decryption, integrity protection, data transmission, and the like on a control plane. The CU-UP is responsible for a user plane function, and mainly includes a service data adaptation protocol (service data adaptation protocol, SDAP) layer and a PDCP-U layer. The SDAP layer is mainly responsible for processing data of the core network and mapping a flow (flow) to a bearer. The PDCP-U layer is mainly responsible for at least one function in encryption and decryption, integrity protection, header compression, serial number maintenance, data transmission, and the like on a data plane. Specifically, the CU-CP and the CU-UP are connected through a communication interface (for example, an El interface). On behalf of the network device, the CU-CP is connected to a core network device through a communication interface (for example, an Ng interface). The CU-CP is connected to the DU through a communication interface (for example, an F1-C (control plane) interface). The CU-UP is connected to the DU through a communication interface (for example, an Fl-U (user plane) interface).

In another possible implementation, the PDCP-C layer is also included in the CU-UP.

It may be understood that the foregoing protocol layer division between the CU and the DU, and protocol layer division between the CU-CP and the CU-UP are merely examples, and there may be another division manner. This is not limited in embodiments of this application.

The network device in embodiments of this application may be a device including the CU, the DU, or the CU and the DU, or may be a device including a CU-control plane node (a CU-CP node), a CU-user plane node (a CU-UP node), and a DU node.

The network device and the terminal device may be deployed on the land, including an indoor device, an outdoor device, a handheld device, or a vehicle-mounted device; may be deployed on the water; or may be deployed on an airplane, a balloon, and a satellite in the air. Scenarios of the network device and the terminal device are not limited in embodiments of this application.

Some embodiments of this application further relate to the core network device. Specifically, the core network device is a device that is in the core network (core network, CN) and that provides service support for the terminal device. Currently, some examples of the core network device are an access and mobility management function (access and mobility management function, AMF) entity, a session management function (session management function, SMF) entity, a user plane function (user plane function, UPF) entity, and the like. Examples are not enumerated one by one herein. The AMF entity may be responsible for access management and mobility management of the terminal device. The SMF entity may be responsible for session management, for example, session establishment of the terminal device. The UPF entity may be a user plane functional entity, and is mainly responsible for connecting to an external network. It should be noted that an entity in this application may also be referred to as a network element or a functional entity. For example, the AMF entity may also be referred to as an AMF network element or an AMF functional entity. For another example, the SMF entity may also be referred to as an SMF network element or an SMF functional entity.

It should be understood that the foregoing names are defined only for ease of distinguishing different functions, and shall not constitute any limitation on this application. This application does not exclude a possibility of using another name in the 5G network and another future network. For example, in the 6G network, a part or all of the foregoing network elements may still use terms in 5G, or may use another name.

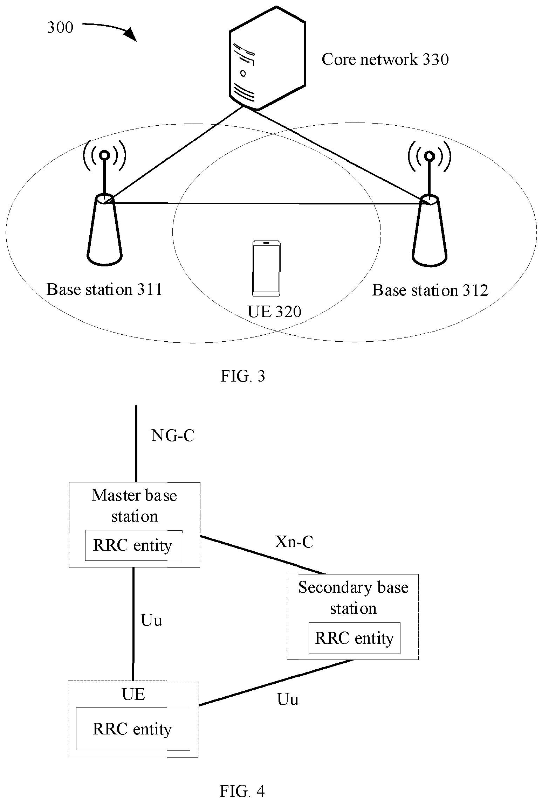

For ease of understanding of embodiments of this application, a communication system usable in embodiments of this application is first described in detail with reference to FIG. 2 and FIG. 3.

As an example for description, FIG. 2 is a schematic diagram of a wireless communication system 200 usable in embodiments of this application. As shown in FIG. 2, the wireless communication system 200 may include at least one network device, for example, a network device 210 shown in FIG. 2. The wireless communication system 200 may further include at least one terminal device, for example, a terminal device 220 shown in FIG. 2. A plurality of antennas may be configured for each of the network device and the terminal device. The network device and the terminal device may communicate with each other by using a multi-antenna technology.

When the network device communicates with the terminal device, the network device may manage one or more cells, and there may be an integer quantity of terminal devices in one cell. Optionally, a single-cell communication system includes the network device 210 and the terminal device 220. Without loss of generality, a cell is denoted as a cell #1. The network device 210 may be a network device in the cell #1, in other words, the network device 210 may serve a terminal device (for example, the terminal device 220) in the cell #1.

It should be noted that the cell may be understood as an area within coverage of radio signals of the network device.

It should be understood that FIG. 2 is merely a simplified schematic diagram used as an example for ease of understanding. The wireless communication system 200 may further include another network device or another terminal device that is not shown in FIG. 2.

A method provided in this application may be further applied to a dual connectivity (dual connectivity, DC) scenario. For ease of understanding, the DC scenario is described with reference to FIG. 3 by using an example in which the terminal device is a UE and the network device is a base station.

In a wireless network, one UE may communicate with a plurality of base stations. This is dual connectivity (dual connectivity, DC), also referred to as multi-radio dual connectivity (multi-radio dual connectivity, MR-DC). For unification, the DC is used for representation below. The plurality of base stations may be base stations that belong to a same radio access technology (radio access technology, RAT) (where for example, the base stations all are 4G base stations or 5G base stations), or may be base stations that belong to different RATs (where for example, one is a fourth generation 4G base station, and one is a fifth generation 5G base station).

As an example for description, FIG. 3 is another schematic diagram of a wireless communication system 300 usable in embodiments of this application. Refer to FIG. 3. A UE 320 may communicate with a base station 311 and a base station 312 by using a DC technology, and the base station 311 and the base station 312 both access a core network 330. The core network 330 may be a 4G core network, or may be a 5G core network.

A network side may provide a communication service for the UE by using resources of a plurality of base stations, to provide high-rate transmission for the UE. In a DC scenario, for a specific UE, a base station that exchanges control-plane signaling with the core network is referred to as a master node (master node, MN), and another base station is referred to as a secondary node (secondary node, SN). The MN may also be referred to as a master base station sometimes, and the SN may also be referred to as a secondary base station sometimes. The base stations have different RLC entities and different MAC entities. In the DC scenario, data radio bearers (data radio bearers, DRBs) may be classified into the following three types: a master cell group bearer (master cell group bearer, MCG bearer), a secondary cell group bearer (secondary cell group bearer, SCG bearer), and a split bearer (split bearer). The MCG bearer means that an RLC entity and a MAC entity of the DRB are on the master base station, the SCG bearer means that an RLC entity and a MAC entity of the DRB are on the secondary base station, and the split bearer means that an RLC entity and a MAC entity of the DRB are on both the master base station and the secondary base station. Similarly, a bearer whose PDCP is terminated on the MN may be referred to as an MN terminated bearer (MN terminated bearer). To be specific, downlink (downlink, DL) data directly arrives at the MN from the core network, is processed by PDCP/SDAP of the MN, and then is sent to the UE through RLC/MAC of the MN or the SN; and uplink (uplink, UL) data is processed by the PDCP/SDAP of the MN, and then sent to the core network. A bearer whose PDCP is terminated on the SN may be referred to as an SN terminated bearer (SN terminated bearer). To be specific, DL data directly arrives at the SN from the core network, is processed by PDCP/SDAP of the SN, and then is sent to the UE through the RLC/MAC of the MN or the SN; UL data is processed by the PDCP/SDAP of the SN, and then sent to the core network. It may be understood that, in some cases, for example, when the terminal device is connected to the 5G core network, there is an SDAP layer.

In addition, in the dual connectivity, the master base station and the secondary base station each have an RRC entity that may generate an RRC message (namely, a control message, for example, a measurement message). As an example for description, FIG. 4 is a schematic diagram of a DC control plane architecture applicable to embodiments of this application. A master base station and a core network communicate with each other through a communication interface (for example, an NG-C interface), the master base station and a secondary base station communicate with each other through a communication interface (for example, an Xn-C interface), the master base station and UE communicate with each other through a communication interface (for example, a Uu interface), and the secondary base station and the UE communicate with each other through a communication interface (for example, a Uu interface).

The secondary base station may directly send, to the UE, an RRC message generated by the secondary base station. In this case, an RRC message sent by the UE to the secondary base station is also directly sent to the secondary base station. The RRC message directly exchanged between the secondary base station and the UE is referred to as a signaling radio bearer 3 (signaling radio bearer 3, SRB3). Alternatively, the secondary base station may notify the master base station of a generated RRC message, and the master base station sends the RRC message to the UE. In this case, the master base station forwards, to the secondary base station, an RRC message sent by the UE to the secondary base station. For a UE in the DC scenario, a user plane of the secondary base station may be connected to the core network connected to the master base station. In other words, the core network may directly send data to the UE through the secondary base station.

It should be understood that an interface between devices (where for example, the master base station and the secondary base station may communicate with each other through the Xn-C interface) in this application is merely an example for description, and does not limit the protection scope of embodiments of this application.

A scenario to which this application is applicable may include the following DC types: evolved universal terrestrial radio access-new radio dual connectivity (E-UTRA-NR dual connectivity, EN-DC), next generation radio access network evolved universal terrestrial radio access-new radio dual connectivity (NG-RAN E-UTRA-NR dual connectivity, NGEN-DC), new radio-evolved universal terrestrial radio access dual connectivity (NR-E-UTRA dual connectivity, NE-DC), and new radio-new radio dual connectivity (NR-NR dual connectivity, NR-DC).

In the EN-DC, the master base station is an LTE base station (for example, an eNB) connected to a 4G core network, and the secondary base station is an NR base station (for example, a gNB).

In the NGEN-DC, the master base station is an LTE base station connected to a 5G core network, and the secondary base station is an NR base station.

In the NE-DC, the master base station is an NR base station connected to a 5G core network, and the secondary base station is an LTE base station. The EN-DC is also referred to as NSA sometimes. This is because in an initial phase of 5G, a UE on an EN-DC network cannot camp on an NR cell. An NR base station on which the UE can camp is also referred to as an SA NR base station sometimes.

In the NR-DC, the master base station is an NR base station connected to a 5G core network, and the secondary base station is an NR base station.

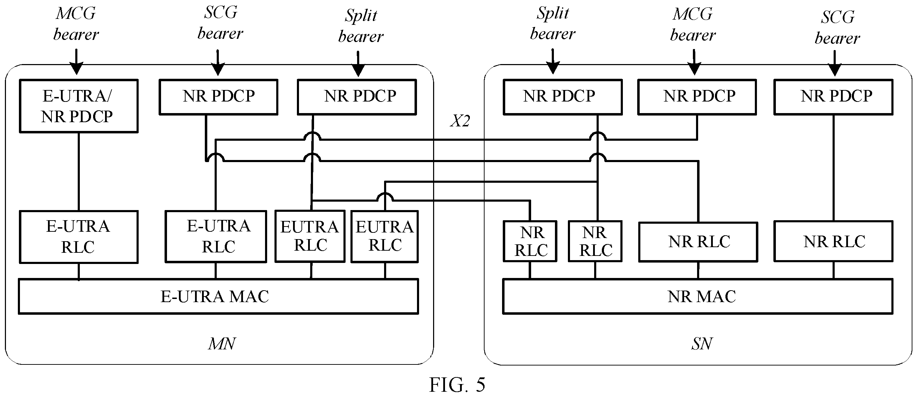

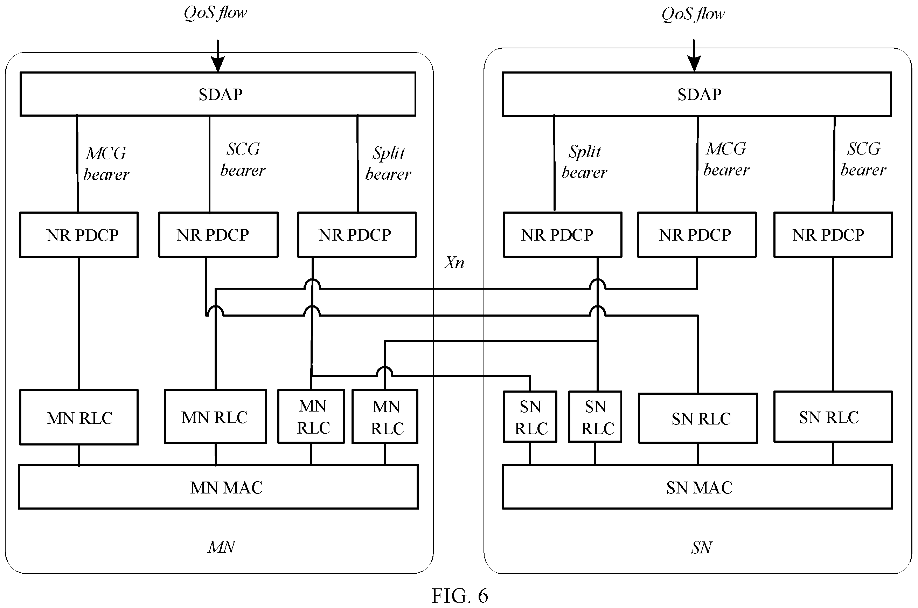

As an example for description, FIG. 5 is a schematic diagram of network-side protocol stacks in EN-DC for an MCG bearer, an SCG bearer, and a split bearer. As an example for description, FIG. 6 is a schematic diagram of network-side protocol stacks in NGEN-DC/NE-DC/NR-DC for an MCG bearer, an SCG bearer, and a split bearer. It can be learned from FIG. 5 and FIG. 6 that transmission of each bearer needs to be performed through RLC/MAC and PDCP/SDAP.

A UE may be served by a plurality of cells of one base station. A serving cell group provided by an MN for the UE may be referred to as a master cell group (master cell group, MCG), and the MCG includes one or more cells (cells). A serving cell group provided by an SN for the UE may be referred to as a secondary cell group (secondary cell group, SCG), and the SCG includes one or more cells. When the MCG includes only one cell, the cell is a primary cell (primary cell, PCell) of the UE. When the SCG includes only one cell, the cell is a primary secondary cell group cell (primary SCG cell, PSCell) of the UE. To normalize various terms, in NR, the PCell and the PSCell are collectively referred to as special cells (special cells, SpCells). When the MCG or the SCG includes a plurality of cells, a cell other than the SpCell may be referred to as a secondary cell (secondary cell, SCell). Carrier aggregation may be performed on the SCell and the SpCell in the MCG or SCG, to jointly provide a transmission resource for the UE.

It should be understood that an application scenario of this application is not limited to the foregoing DC scenario. This application is further applicable to a DC scenario of another system, for example, a DC scenario including a 5G base station and Wi-Fi, or a DC scenario including a base station deployed as a licensed spectrum and a base station deployed as an unlicensed spectrum.

For ease of understanding of embodiments of this application, several basic concepts in embodiments of this application are briefly described. It should be understood that basic concepts described below are briefly described by using basic concepts specified in a current protocol as an example, but embodiments of this application are not limited to being applied only to an existing communication system. Therefore, standard names appearing when the existing communication system is used as an example for description are all function descriptions, and specific names are not limited.
1. Carrier aggregation (carrier aggregation, CA): is a technology in which a plurality of component carriers (cells) are configured for a single terminal device jointly to perform data transmission.
2. Primary cell PCell: is a cell deployed on a primary frequency (in other words, a cell that operates on a primary component carrier). The PCell is a corresponding cell in which the terminal device initiates an initial connection establishment process or a connection re-establishment process. To be specific, if the terminal device initiates the initial connection establishment process or the connection re-establishment process in a specific cell, the cell is referred to as the PCell. In a handover process, one cell may be indicated as a PCell.
3. Primary secondary cell group cell PSCell: is a cell in which the terminal device performs random access or initial physical uplink shared channel (physical uplink shared channel, PUSCH) transmission in the SCG (where for example, when an SCG change is performed and a random access process is not needed, the UE initiates the initial PUSCH transmission), or a cell that is in the SCG and in which the terminal device performs random access in a synchronous reconfiguration process.
4. Secondary cell SCell: is a cell that operates on a secondary component carrier. Once an RRC connection is established, the SCell may be configured to provide an additional radio resource. In a dual-connectivity system, all cells other than a PCell and a PSCell in an MCG and an SCG may be referred to as SCells.
   It should be understood that the PSCell is also referred to as the SCell in some descriptions, in other words, the SCell also includes the PSCell.
5. Serving cell (serving cell): If carrier aggregation or dual connectivity is not configured for a terminal device in RRC connected (RRC_CONNECTED) mode, there is only one serving cell, namely, a PCell. If carrier aggregation or dual connectivity is configured, it may be considered that serving cells of the terminal device include a PCell, a PSCell, and all SCells.

It should be understood that the PCell, the PSCell, and all the SCells above are merely an example. In a future protocol, meanings indicating a same function are all applicable to embodiments of this application.

It should be further understood that each component carrier (component carrier, CC) corresponds to one independent cell. In a possible design, a terminal device for which carrier aggregation or dual connectivity is configured may be connected to one PCell and a maximum of 31 SCells. A serving cell set of the terminal device includes the PCell, a PSCell, and all the SCells of the terminal device. A serving cell of the terminal device may refer to the PCell, the PSCell, or the SCell.

In the dual connectivity, generally, because of mobility of a terminal device, a network side triggers a PSCell change (to be specific, the network side notifies the terminal device to be handed over from a PSCell to another PSCell, and notifies configuration information corresponding to the PSCell obtained after the change). For example, the network side learns, based on a measurement result of the terminal device, that signal quality of a PSCell becomes worse and signal quality of another PSCell becomes better, so that the network side notifies the terminal device to perform the PSCell change. It should be understood that the PSCell change may be that the terminal device is handed over from a cell of an SN to a cell of another SN, or may be that the terminal device is handed over from a cell of an SN to another cell of the SN. In addition, the PSCell change may be triggered (triggered) by an MN, in other words, the MN determines (or initiates (initiates)) a handover from a PSCell to another PSCell; or may be triggered by the SN, in other words, the SN determines (or initiates) a handover from a PSCell to another PSCell.

A conditional PSCell addition or change (conditional PSCell addition/change, CPAC) method is as follows: A network side configures a plurality of candidate PSCells in advance, and notifies a terminal device of configurations of the plurality of candidate PSCells and a condition corresponding to each candidate PSCell. Subsequently, when determining that there is a candidate PSCell that meets a condition corresponding to the candidate PSCell, the terminal device may directly access the candidate PSCell that meets the condition. In this way, the network side does not need to wait, before delivering a new PSCell configuration to the terminal device, for the terminal device to report a measurement report, so that a delay for a PSCell addition or change can be reduced. In addition, in a scenario in which the SN triggers the PSCell change, a failure in reporting a measurement report and delivering a reconfiguration message through an SRB3 when signal quality of a PSCell rapidly changes can be avoided. Therefore, robustness of the PSCell change is improved.

It may be understood that, the CPAC in this application is a general term. In this application, the CPAC may refer to a conditional PSCell addition and/or change configuration.

In the CPAC, when there is the candidate PSCell meeting the condition corresponding to the candidate PSCell, the terminal device may directly access the candidate PSCell that meets the condition, so that the delay for the PSCell addition or change can be shortened. However, after the terminal device accesses the candidate PSCell, the candidate PSCell cannot immediately send data to the terminal device, but needs to send the data to the terminal device only after a device that is before the terminal device accesses the candidate PSCell sends data packets to the candidate PSCell. This increases a transmission delay of these data packets.

Embodiments of this application provide a solution, to reduce a data transmission delay.

It should be noted that, in embodiments of this application, a handover process mainly includes a CPAC-related procedure, for example, includes a PSCell addition or change.

With reference to the accompanying drawings, the following describes in detail embodiments provided in this application.

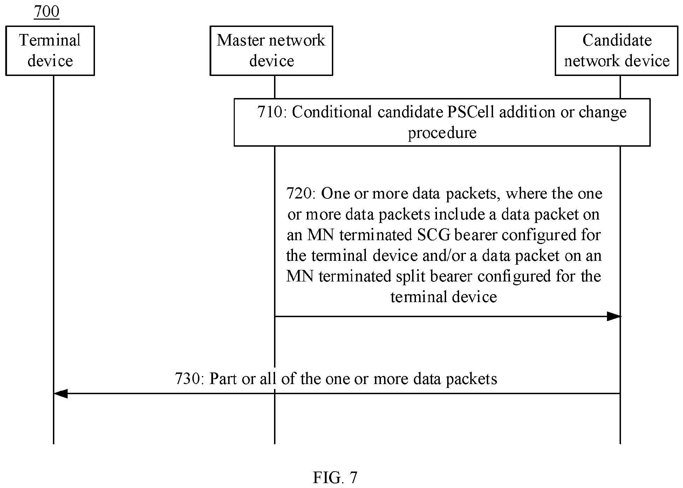

FIG. 7 is a schematic diagram of a data transmission method 700 according to an embodiment of this application. The method 700 may include the following steps.

710: A master network device performs a conditional candidate PSCell addition or change procedure with a candidate network device.

The master network device may be, for example, an MN, and the candidate network device and a secondary network device may be, for example, SNs.

In step 710, a master network device or a secondary network device may trigger the conditional candidate PSCell addition or change configured for a terminal device. To be specific, the master network device or the secondary access network device triggers the candidate network device to configure a plurality of candidate PSCells in advance. Then, the master access network device may notify the terminal device of configurations of the plurality of candidate PSCells and a trigger condition corresponding to each candidate PSCell. Subsequently, when determining that there is a candidate PSCell that meets a trigger condition corresponding to the candidate PSCell, the terminal device may directly access the candidate PSCell that meets the condition. When there are a plurality of candidate PSCells that meet trigger conditions corresponding to the candidate PSCells, for a specific candidate PSCell that meets the condition and that the terminal device is to access, corresponding design may be made based on a requirement of a system to which the terminal device belongs. For example, the terminal device performs determining, to select any candidate PSCell that meets the condition, or select a candidate PSCell that the terminal device previously accesses. This is not limited herein.

It should be understood that, mainly for ease of understanding, FIG. 7 uses the master network device and one candidate network device as an example for description. A quantity of candidate network devices is not limited in this embodiment of this application. For example, more candidate network devices may be actually included.

720: The master network device sends one or more data packets to the candidate network device, where the one or more data packets include a data packet on an MN terminated SCG bearer configured for the terminal device and/or a data packet on an MN terminated split bearer configured for the terminal device.

In other words, in step 720, the master network device may send one or more data packets, namely, one or more downlink data packets, to a network device to which the candidate PSCell belongs. The network device to which the candidate PSCell belongs is the candidate network device, and may be, for example, a candidate SN.

In a possible manner, in step 720, the master network device performs early data transmission oriented to the network device to which the candidate PSCell belongs. The early data transmission is sending, before the terminal device accesses the candidate PSCell, the one or more data packets to the network device to which the candidate PSCell belongs.

A form of the one or more data packets sent by the master network device to the candidate network device may be a packet data convergence protocol protocol data unit (protocol data unit, PDU) (PDCP PDU).

In this embodiment of this application, the master network device may perform early data transmission that is oriented to the candidate network device and that is on the data packet on the MN terminated SCG bearer, and may further perform early data transmission that is oriented to the candidate network device and that is on the data packet on the MN terminated split bearer.

The data packet on the MN terminated SCG bearer indicates that an RLC entity and a MAC entity of a DRB corresponding to the data packet are on the SN, and a PDCP entity is on the MN. Similarly, the data packet on the MN terminated split bearer indicates that an RLC entity and a MAC entity of a DRB corresponding to the data packet are on the SN and the MN, and a PDCP entity is on the MN. To be specific, in the early data transmission, the data packet on the MN terminated SCG bearer or the MN terminated split bearer is processed by PDCP/SDAP of the MN.

It should be understood that, in embodiments of this application, whether a PDCP layer is deployed on the candidate network device (for example, the candidate SN) or whether the candidate network device supports a function of the PDCP layer is not limited.

In this application, for the MN terminated SCG bearer or the MN terminated split bearer, the early data transmission may also be referred to as early data forwarding, or may have another name. A name of the early data transmission does not limit the protection scope of embodiments of this application. In the following, for unification, data forwarding between the master network device or the secondary network device and the candidate network device in a CPAC is denoted as the early data forwarding.

Optionally, the method 700 may further include step 730.

730: After the terminal device accesses the candidate network device, the candidate network device sends a part or all of the one or more data packets to the terminal device.

In other words, after the terminal device accesses the candidate network device, the candidate network device may send, to the terminal device, data that has been forwarded to the candidate network device, so that a data transmission delay can be reduced.

According to this embodiment of this application, the early data forwarding may be performed between the master network device and the candidate network device (for example, the MN and the candidate SN). In this way, after the terminal device accesses the candidate network device, the candidate network device may send, to the terminal device, the data that has been forwarded to the candidate network device, to reduce the data transmission delay. In addition, for the MN terminated SCG bearer and/or the MN terminated split bearer, the master network device may also perform early data forwarding oriented to the candidate network device, for example, perform early data forwarding in a form of the PDCP PDU. Therefore, this embodiment of this application can support the early data forwarding of the data packet on the MN terminated SCG bearer and/or the data packet on the MN terminated split bearer, so that a transmission delay of data on these bearers can be reduced.

Optionally, the master network device may further send indication information #1 to the candidate network device (namely, the network device to which the candidate PSCell belongs), to indicate to discard or ignore a part or all of the one or more data packets. For example, the MN may send the indication information #1 to the candidate SN, to indicate to discard or ignore a part or all of the data packets in the early data forwarding. In this way, the candidate network device may send data to the terminal device based on the data in the early data forwarding and the indication information #1. In this case, the candidate network device may send the part of the one or more data packets to the terminal device. By way of example instead of limitation, the candidate network device may discard the data packets that are indicated to be discarded, or may directly ignore these data packets. For example, after the master network device sends a CPAC configuration to the terminal device, the master network device or the secondary network device continues to send data to the terminal device, so that the master network device or the secondary network device may have successfully sent a part of data packets to the terminal device in duration from sending a CPAC configuration to the terminal device to accessing the candidate PSCell by the terminal device. To avoid that the candidate network device sends, to the terminal device again after the terminal device accesses the candidate PSCell, the data packets that have been successfully sent to the terminal device, the master network device or the secondary network device notifies the candidate network device to discard or ignore some data packets that have been successfully sent to the terminal device.

This manner can avoid a case in which the candidate network device reserves or repeatedly sends, to the terminal device, some data packets that have been successfully received by the terminal device, to reduce a resource waste.

In this embodiment of this application, for differentiation, the indication information #1 represents information indicating to discard or ignore the part or all of the data packets in the early data forwarding.

A sending occasion for the indication information #1 is not limited. For example, the indication information #1 may be sent when a preset condition is met. The preset condition may be a time limitation (for example, periodic sending), may be a data amount limitation (for example, a comparison between a data amount and a threshold or a threshold range), or may be a limitation in another respect.

In addition, a form of the indication information #1 is not limited either. In a possible form, the indication information #1 may be in a form of one or more sequence numbers (sequence numbers, SNs). In this application, the sequence number is mentioned for a plurality of times, and a specific form of the sequence number is not limited. For example, the sequence number may be a packet data convergence protocol sequence number (packet data convergence protocol sequence number, PDCP SN), may be a new radio user plane sequence number (new radio user plane sequence number, NR-U SN), or may be another sequence number. This is not limited, and is not described again in the following.

A sending manner of the indication information #1 is not limited either. For example, the indication information #1 may be sent through a user plane between the master network device and the candidate network device, or may be sent through a control plane between the master network device and the candidate network device (where for example, the master network device sends a message to the candidate network device, and for example, the master network device includes the indication information #1 in an early status transfer (early status transfer) message).

An example in which the indication information #1 is sent through the user plane between the master network device and the candidate network device is used. For example, data sent by the master network device to the candidate network device through the user plane carries a sequence number corresponding to the data packet that needs to be discarded or ignored. For example, the data carries one PDCP SN, to indicate to discard or ignore all data packets whose sequence numbers are before the sequence number, where the data packets include a data packet corresponding to the sequence number. For another example, the data carries indication information to indicate data packets corresponding to a plurality of blocks (blocks). For example, the indication information includes a quantity of blocks, a PDCP SN corresponding to the first data packet that is in each block and that needs to be discarded or ignored, and a quantity of data packets corresponding to the block, where each block corresponds to data packets corresponding to some consecutive PDCP SNs.

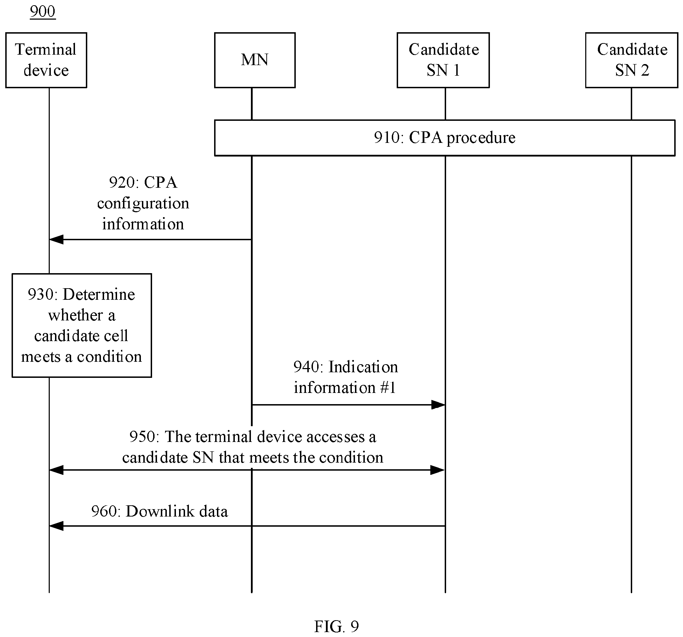

Specific content of the indication information #1 is described in detail below with reference to a method 900 shown in FIG. 9.

Optionally, the master network device may further send indication information #2 to the candidate network device (namely, the network device to which the PSCell belongs), where the indication information #2 indicates to perform early data transmission on the MN terminated SCG bearer and/or the MN terminated split bearer. For example, the MN may send the indication information #2 to the candidate SN, to indicate to perform early data transmission on the MN terminated SCG bearer and/or the MN terminated split bearer. After sending the indication information #2 to the candidate network device, the master network device may perform early data transmission on the MN terminated SCG bearer and/or the MN terminated split bearer with the candidate network device.

In this embodiment of this application, for differentiation, the indication information #2 represents information indicating to perform early data transmission on the MN terminated SCG bearer and/or the MN terminated split bearer.

The indication information #2 may be sent through a control plane interface between the master network device and the candidate network device, or may be sent through a user plane interface between the master network device and the candidate network device. This is not limited.

In addition, an indication manner may be: giving an indication by using specific content in the indication information #2, or giving an indication through an action of sending the indication information #2. This is not limited. For example, the indication is given through the action of sending the indication information #2. By way of example instead of limitation, a specific field may be pre-agreed on or pre-configured. When the field is sent, it indicates that the early data transmission is performed on the MN terminated SCG bearer and/or the MN terminated split bearer.

A specific procedure applicable to the method 700 is described below with reference to embodiments shown in FIG. 9 to FIG. 11.

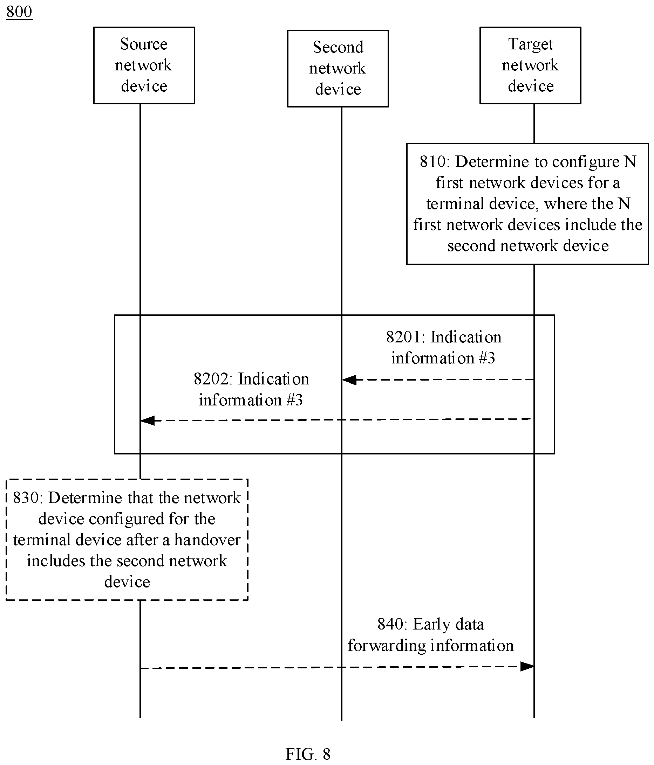

FIG. 8 is a schematic diagram of a data transmission method 800 according to an embodiment of this application. The method 800 may include the following steps.

810: A target network device determines to configure N first network devices for a terminal device, where the N first network devices include a second network device.

N is an integer greater than or equal to 1.

In this embodiment of this application, for differentiation, the target network device represents a network device that is after a handover, and a source network device represents a network device that is before the handover. The network device may be, for example, an MN or an SN. For example, the handover is performed from a source MN to a target MN. For another example, the handover is performed from a source SN to a target SN. For another example, the handover is performed from a source MN to a target MN and from a source SN to a target SN.

The target network device determines to configure the N first network devices for the terminal device, where the N first network devices may include a network device that provides a service for the terminal device and/or a candidate network device. After the handover, if the N first network devices include the second network device, the second network device may be a network device that provides a service for the terminal device, or may be a candidate network device.

In this application, before the handover means before the terminal device is handed over from the source network device to the target network device, to be specific, before a network device that provides a service for the terminal device changes from the source network device to the target network device, before a candidate network device configured for the terminal device changes from the source network device to the target network device, or before a network device that provides a service for the terminal device or a candidate network device configured for the terminal device changes. After the handover means after the terminal device is handed over from the source network device to the target network device, to be specific, after the network device that provides the service for the terminal device changes from the source network device to the target network device, after the candidate network device configured for the terminal device changes from the source network device to the target network device, or after the network device that provides the service for the terminal device or the candidate network device configured for the terminal device changes. For brevity, the following uses before the handover and after the handover for description.

The second network device that is before the handover and after the handover may be in the following cases.

In a possible case, the second network device that is after the handover is a candidate network device that is configured for the terminal device and that is in a conditional candidate primary secondary cell group cell PSCell addition or change scenario.

For example, in a scenario in which the conditional primary secondary cell group cell (primary secondary cell group cell, PSCell) addition (conditional PSCell addition, CPA)/conditional primary secondary cell group cell (primary secondary cell group cell, PSCell) change (conditional PSCell change, CPC) is configured after the handover, a candidate network device that the target network device determines to configure is partially or completely the same as a network device that is before the handover (where for example, before the handover, the network device is a network device that provides a service for the terminal device, or is a candidate network device configured for the terminal device). In other words, the candidate network device that the target network device determines to configure includes the network device configured for the terminal device before the handover, namely, the second network device.

Before the handover, the second network device may be the network device that provides the service for the terminal device. For example, before the handover, the second network device is a network device in a DC scenario, for example, is a secondary network device. Alternatively, before the handover, the second network device may be the candidate network device configured for the terminal device. For example, before the handover, the second network device is a network device in a CPA/CPC scenario.

In another possible case, the second network device that is before the handover is a candidate network device that is configured for the terminal device and that is in a conditional candidate primary secondary cell group cell PSCell addition or change scenario.

For example, in a CPA/CPC scenario before the handover, the second network device is the candidate network device configured for the terminal device. After the handover, the second network device may be the candidate network device, or may be the network device that provides the service for the terminal device.

In an example, in the scenario in which the CPA/CPC is configured after the handover, a candidate network device that the target network device determines to configure is partially or completely the same as a candidate network device configured for the terminal device before the handover. In other words, the candidate network device that the target network device determines to configure includes the candidate network device configured for the terminal device before the handover, namely, the second network device.

In another example, in a scenario in which DC is configured after the handover, a network device (for example, a secondary network device) that the target network device (for example, a master network device) determines to configure is partially or completely the same as a candidate network device configured for the terminal device before the handover. In other words, the network device that the target network device determines to configure includes the candidate network device configured for the terminal device before the handover, namely, the second network device.

In another possible case, before and after the handover, the second network device is a candidate network device that is configured for the terminal device and that is in a conditional candidate primary secondary cell group cell PSCell addition or change scenario.

For example, in a CPA/CPC scenario before the handover, the second network device is the candidate network device configured for the terminal device. In the scenario in which the CPA/CPC is configured after the handover, a candidate network device that the target network device determines to configure is partially or completely the same as a candidate network device configured for the terminal device before the handover.

It should be understood that the foregoing three possible cases are merely examples for description, and a variant of any one of the foregoing cases is applicable to embodiments of this application. For example, the N first network devices include a plurality of second network devices, to be specific, the target network device may determine to maintain a plurality of second network devices configured for the terminal device before the handover.

After the handover, when the target network device determines that the N first network devices configured for the terminal device include the network device configured for the terminal device before the handover, data forwarded in previous early data forwarding may be used, in other words, some unnecessary data forwarding may be reduced. For example, the target network device may send indication information, for example, denoted as indication information #3, to indicate to use or maintain information related to the terminal device in the second network device.

The information related to the terminal device in the second network device may include, for example, one or more of the following: a context of the terminal device in the second network device, a data packet of the terminal device that has been transmitted to the second network device, and information about a data packet that is discardable or ignorable by the second network device. The data packet discardable by the second network device represents a discardable data packet in the data packet that is in the second network device and that is in the previous early data forwarding. By way of example instead of limitation, the indication information #3 may indicate to maintain the context of the terminal device in the second network device. Alternatively, the indication information #3 may indicate to use or maintain early data forwarding information of the second network device. The early data forwarding information of the second network device includes: the data packet that is in the second network device and that is in the previous early data forwarding (namely, the data packet of the terminal device that has been transmitted to the second network device) and/or the information about the data packet discardable or ignorable by the second network device.

In this embodiment of this application, for differentiation, the indication information #3 represents information indicating to use or maintain information related to the terminal device in some network devices configured for the terminal device before the handover. A specific indication manner may be: giving an indication by using specific content in the indication information #3, or giving an indication through an action of sending the indication information #3. This is not limited in embodiments of this application.

In an example, the specific content in the indication information #3 may indicate to use or maintain the information related to the terminal device in some network devices configured for the terminal device before the handover.

For example, it is assumed that a function of the indication information #3 is predefined, in a protocol, as using or maintaining the information related to the terminal device in some network devices configured for the terminal device before the handover. For example, a 1-bit field may indicate to use or maintain the information related to the terminal device in some network devices configured for the terminal device before the handover. 0 corresponds to using or maintaining the information related to the terminal device in some network devices configured for the terminal device before the handover, and 1 corresponds to not using or not needing to maintain the information related to the terminal device in some network devices configured for the terminal device before the handover or releasing the information related to the terminal device in some network devices configured for the terminal device before the handover.

For another example, a 1-bit field may indicate that the indication information #3 indicates whether to maintain the context of the terminal device in the second network device or use or maintain the early data forwarding information of the second network device. 0 corresponds to that the indication information #3 indicates to maintain the context of the terminal device in the second network device, and 1 corresponds to that the indication information #3 indicates to use or maintain the early data forwarding information of the second network device.

In another example, the action of sending the indication information #3 may indicate to use or maintain the information related to the terminal device in some network devices configured for the terminal device before the handover. For example, the indication information #3 specific to indicating to use or maintain the information related to the terminal device in some network devices configured for the terminal device before the handover may be designed. When the information is received, it is determined that the information related to the terminal device in some network devices configured for the terminal device before the handover needs to be used or maintained. When the information is not received, it is determined that the information related to the terminal device in some network devices configured for the terminal device before the handover is not to be used or does not need to be maintained, or that the information related to the terminal device in some network devices configured for the terminal device before the handover is to be released.

The method 800 may include step 8201 or step 8202.

8201: The target network device sends the indication information #3 to the second network device.

In step 8201, the target network device sends the indication information #3 to the second network device. After the second network device receives the indication information #3, the second network device may determine, based on the indication information #3, that the data packet forwarded in the previous early data forwarding does not need to be released. That the second network device uses the information related to the terminal device may indicate that the second network device maintains or reserves the data packet forwarded in the previous early data forwarding. Alternatively, before the second network device receives the indication information #3, if the second network device receives indication information #1, for example, the second network device receives, from the source network device, the indication information #1, namely, indication information indicating to discard or ignore a part or all of data packets, the second network device may determine, based on the data packet forwarded in the early data forwarding and the indication information #1, which data packets are to be maintained or reserved or which data packets are to be sent to the terminal device.

8202: The target network device sends the indication information #3 to the source network device.

In step 8202, the target network device sends the indication information #3 to the source network device. After receiving the indication information #3, the source network device may determine that the second network device does not need to release the data packet forwarded in the previous early data forwarding. For example, the source network device may continue to forward a data packet to the second network device, and subsequently the second network device may send the forwarded data packet to the terminal device. The source network device may further send indication information #1 to the second network device, to indicate to discard or ignore a part or all of data packets.

In addition, the source network device may further forward the indication information #3 to the second network device. The second network device may determine, based on the indication information #3, that the second network device does not need to release the data packet forwarded in the previous early data forwarding. The indication information #3 sent by the source network device to the second network device may be the same as or different from the indication information #3 received by the source network device from the target network device. This is not limited. In an example, the indication information #3 sent by the source network device to the second network device is different from the indication information #3 received by the source network device from the target network device. For example, the indication information #3 received by the source network device from the target network device indicates to use or maintain the early data forwarding information of the second network device, and the indication information #3 sent by the source network device to the second network device indicates to maintain the context of the terminal device in the second network device. In another example, the indication information #3 sent by the source network device to the second network device is the same as the indication information #3 received by the source network device from the target network device. For example, the indication information #3 received by the source network device from the target network device indicates to use or maintain the early data forwarding information of the second network device, and the indication information #3 sent by the source network device to the second network device also indicates to use or maintain the early data forwarding information of the second network device.

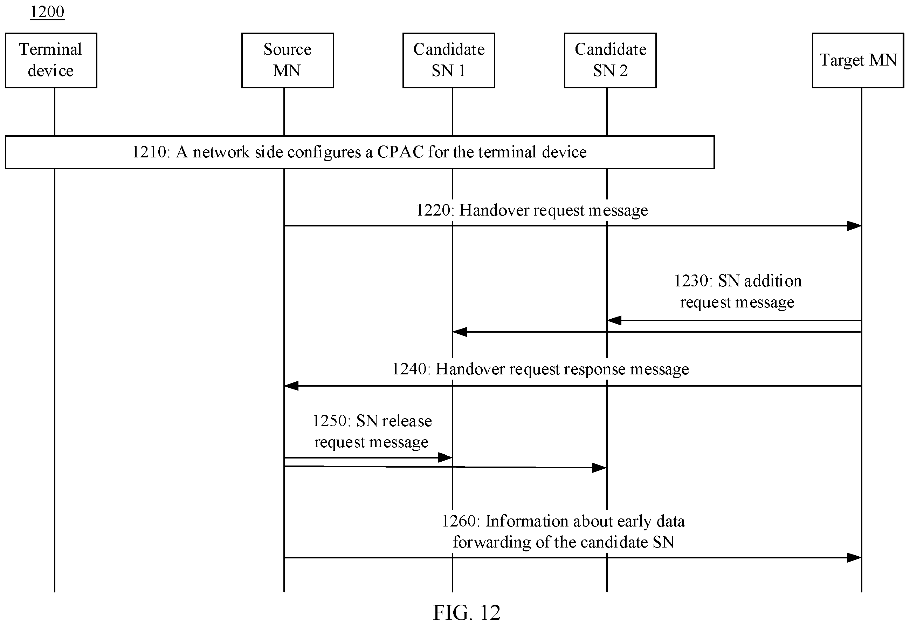

The foregoing is merely a brief description. A specific procedure applicable to the method 800 is described below with reference to embodiments shown in FIG. 12 to FIG. 14.

According to this embodiment of this application, the data forwarded in the previous early data forwarding may be used when the network device determined after the handover to be configured for the terminal device includes the network device configured for the terminal device before the handover, to avoid forwarding these data packets again in the early data forwarding, to reduce a transmission delay of these data packets.

Optionally, the method 800 may further include step 830.

830: The source network device determines that the network device configured for the terminal device after the handover includes the second network device.

In a possible manner, the target network device sends identification information of the second network device to the source network device, and the source network device determines, based on the identification information of the second network device, that the network device configured for the terminal device after the handover includes the second network device, in other words, determines that a network device of the data packet in the early data forwarding needs to be maintained or reserved. A manner of using an identifier is simple and accurate. In addition, when the plurality of second network devices are involved, in other words, the N first network devices that are after the handover include a plurality of candidate network devices (namely, the plurality of second network devices) that are before the handover, a small quantity of resources are used in an identifier indication manner.

For example, the source network device sends a handover request message to the target network device, and the target network device sends a handover request response message to the source network device, where the handover request response message carries the identification information of the second network device. For another example, the identification information of the second network device and the indication information #3 may be carried in same signaling.

The following describes an example of a solution in which the identification information of the second network device and the indication information #3 are carried in the same signaling.

For example, when the network device configured for the terminal device after the handover includes one second network device, the source network device receives one piece of signaling sent by the target network device, where the signaling includes the indication information #3 and an identifier of the second network device, and the indication information #3 indicates to use the information related to the terminal device in the second network device. The source network device determines, based on the signaling, that the network device configured for the terminal device after the handover includes the second network device. Further, the signaling may include indication information indicating whether the second network device configured by the target network device for the terminal device serves as the candidate network device or the secondary network device.

For another example, when the network device configured for the terminal device after the handover includes the plurality of second network devices, the source network device receives one piece of signaling sent by the target network device, where the signaling includes the indication information #3 and identifiers of the plurality of second network devices, and the indication information #3 indicates to use information related to the terminal device in the plurality of second network devices. The source network device determines, based on the identifiers of the plurality of second network devices included in the signaling, that the network device configured for the terminal device after the handover includes the plurality of second network devices. Further, the signaling may include indication information indicating whether the second network device configured by the target network device for the terminal device serves as the candidate network device or the secondary network device.

For another example, when the network device configured for the terminal device after the handover includes the plurality of second network devices, the source network device receives a plurality of pieces of signaling sent by the target network device, where each piece of signaling includes one piece of indication information #3 and an identifier of one second network device, and the indication information #3 indicates to use information related to the terminal device in the second network device. The source network device determines, based on the identifiers of the plurality of second network devices included in the plurality of pieces of signaling, that the network device configured for the terminal device after the handover includes the plurality of second network devices. Further, each piece of signaling may include indication information indicating whether the second network device configured by the target network device for the terminal device serves as the candidate network device or the secondary network device.

It should be understood that the foregoing is merely an example for description. This is not limited. Any solution in which the source network device can determine whether the network device configured for the terminal device after the handover includes the network device that is before the handover is applicable to embodiments of this application. For example, the target network device may send identification information of the N first network devices to the source network device, and the source network device determines, based on the identification information of the N first network devices, whether the network device configured for the terminal device after the handover includes the network device that is before the handover.

Optionally, the target network device may receive the information related to the terminal device in the second network device. For example, as shown in FIG. 8, the method 800 may further include step 840.

840: The target network device may receive the early data forwarding information from the source network device.

In this way, the target network device may determine, based on the early data forwarding information, for example, the data packet that is in the second network device and that is forwarded in the previous early data forwarding and/or information about the data packet that is discardable or ignorable by the second network device, which data packets to be sent to the terminal device are subsequently forwarded to the second network device.

In addition, the target network device may further notify the second network device of data packets in the early data transmission that are discardable. For example, the target network device may further send the indication information #1 to the second network device.

Optionally, the target network device may further learn of information about the network device configured for the terminal device before the handover. The second network device is used as an example. Information about the second network device configured for the terminal device before the handover may include, for example, the identification information of the second network device and/or identification information of the terminal device in the second network device. The information about the network device configured for the terminal device before the handover may be, for example, carried in the handover request message. To be specific, the source network device sends the handover request message to the target network device, where the handover request message may include the information about the network device configured for the terminal device before the handover.

In addition, the target network device may further determine, based on identification information of the network device configured for the terminal device before the handover, whether the configured N first network devices include the network device configured for the terminal device before the handover. For example, the target network device can learn, based on an identifier of the network device, whether the network device that is before the handover is the same the network device that is after the handover.

In addition, after learning of the information about the network device configured for the terminal device before the handover, the target network device may determine, based on the information, which network devices are to be selected to provide a service for the terminal device, or may determine, based on the information, which candidate network devices are to be selected. In this way, the previous early-transmitted data can be reused as much as possible, to reduce a transmission delay, and improve user experience.

Optionally, the target network device may further send the identification information of the terminal device in the second network device to the second network device.

The data transmission method provided in embodiments of this application is separately described above with reference to FIG. 7 and FIG. 8. It should be understood that the method 700 and the method 800 may be used separately, or may be used in combination. This is not limited. For example, the method 700 and the method 800 are used in combination. Before the handover, early data forwarding may be performed according to the solution described in the method 700; and when it is determined that a network device handover needs to be performed, the handover may be performed according to the solution described in the method 800.

For ease of understanding, examples are provided for description with reference to different procedures.

First, with reference to FIG. 9 to FIG. 11, possible procedures applicable to the embodiment described in the method 700 are described.

FIG. 9 is a schematic diagram of a conditional PSCell addition (conditional PSCell addition, CPA) procedure applicable to embodiments of this application. As shown in FIG. 9, the method 900 is mainly described by using interaction between a terminal device, an MN, a candidate SN 1, and a candidate SN 2 as an example. The method 900 shown in FIG. 9 may include the following steps.

910: The MN performs a conditional PSCell addition procedure with the candidate SNs.

As shown in FIG. 9, the MN performs the conditional PSCell addition procedure (namely, the CPA procedure) with the candidate SN 1 and the candidate SN 2.

For example, the MN sends an SN addition request message to each candidate SN. For example, the SN addition request message may carry indication information indicating that the current SN addition request message is for a conditional SN addition. Alternatively, for example, regardless of a conditional SN addition or a conditional SN change, the SN addition request message indicates that the current SN addition request message is for the conditional SN addition.

The candidate SN may send a response message for the SN addition request message to the MN. For example, the candidate SN may feed back an SN addition request acknowledgment message to the MN. For example, the SN addition request acknowledgment message may carry indication information indicating that the current SN addition request acknowledgment message is a response for the conditional SN addition. For example, the SN addition request acknowledgment message may further carry wireless configuration information that corresponds to a candidate PSCell and that is configured by the candidate SN for the terminal device.

The foregoing is merely an example for description. Step 910 is not limited in this embodiment of this application. For example, for step 910, refer to a conventional technology or a manner in the future.

It should be understood that, in this embodiment of this application, one conditional SN addition procedure may correspond to one candidate PSCell, to be specific, one SN addition request message and one SN addition request acknowledgment message are specific to one candidate PSCell. Alternatively, one conditional SN addition procedure may correspond to a plurality of candidate PSCells, to be specific, one SN addition request message and one SN addition request acknowledgment message are specific to a plurality of candidate PSCells.

920: The MN sends CPA configuration information to the terminal device.

For example, the MN sends an RRC reconfiguration message to the terminal device, where the RRC reconfiguration message includes the CPA configuration information.

The CPA configuration information may include, for example, one or more of the following: a trigger condition configured by the MN for each candidate PSCell, the wireless configuration information that corresponds to the candidate PSCell and that is configured by the candidate SN for the terminal device, and wireless configuration information, of an MCG, that corresponds to each candidate PSCell and that is configured by the MN for the terminal device when the terminal device accesses the candidate PSCell. The trigger condition indicates that the terminal device can access a candidate PSCell cell when the candidate PSCell meets a specific condition. For example, the trigger condition may be that signal quality of the candidate PSCell meets a specific condition, for example, the signal quality of the candidate PSCell is better than a specific threshold, the signal quality of the candidate PSCell is better than signal quality of a PCell by a specific threshold, or signal quality of a PCell is worse than a specific threshold and the signal quality of the candidate PSCell is better than a specific threshold.

In addition, when the terminal device selects, as a final PSCell, a specific candidate PSCell that meets a condition, the terminal device may use wireless configuration information corresponding to the candidate PSCell. If the CPA configuration information includes the wireless configuration information, of the MCG, that corresponds to each candidate PSCell and that is configured by the MN for the terminal device, the terminal device also uses the wireless configuration information, of the MCG, that corresponds to the candidate PSCell.

The foregoing is merely an example for description. Step 920 is not limited in this embodiment of this application. For example, for step 920, refer to a conventional technology or a manner in the future.

930: The terminal device determines whether the candidate PSCell meets the trigger condition that corresponds to the candidate PSCell and that is in a CPA.

For example, the terminal device receives the CPA configuration information from the MN, and the terminal device determines, based on the candidate PSCell and the corresponding trigger condition in the CPA configuration information, whether the trigger condition corresponding to the PSCell is met.

The foregoing is merely an example for description. Step 930 is not limited in this embodiment of this application. For example, for step 930, refer to a conventional technology or a manner in the future.

940: The MN sends indication information #1 to the candidate SN, to indicate to discard or ignore a part or all of data packets in early data forwarding.

As shown in FIG. 9, the MN sends the indication information #1 to the candidate SN 1, to indicate to discard or ignore the part or all of the data packets in the early data forwarding.

In other words, in step 940, the MN sends the indication information #1 to the candidate SN, where the indication information #1 indicates which data packets on an MN terminated SCG bearer and/or an MN terminated split bearer in the early data forwarding are to be discarded or ignored.

In this embodiment of this application, for differentiation, the indication information #1 represents information indicating to discard or ignore the part or all of the data packets in the early data forwarding.

In an example, before step 940, the MN may perform early data forwarding (early data forwarding) oriented to the candidate SN (for example, the candidate SN 1) on the MN terminated SCG bearer. In step 940, the MN sends the indication information #1 to the candidate SN (for example, the candidate SN 1), to indicate which data packets on the MN terminated SCG bearer in the early data forwarding are to be discarded or ignored.

In another example, before step 940, the MN may perform early data forwarding oriented to the candidate SN (for example, the candidate SN 1) on the MN terminated split bearer. In step 940, the MN sends the indication information #1 to the candidate SN (for example, the candidate SN 1), to indicate which data packets on the MN terminated split bearer in the early data forwarding are to be discarded or ignored.

As described above, for the MN terminated SCG bearer or the MN terminated split bearer, the early data forwarding may also be referred to as early data transmission, or may have another name. A name of the early data forwarding does not limit the protection scope of embodiments of this application. In this application, the early data forwarding is mainly used as an example for description.

The MN performs early data forwarding oriented to the candidate SN on the MN terminated SCG bearer or the MN terminated split bearer. For these bearers (namely, the MN terminated SCG bearer or the MN terminated split bearer), in a possible implementation, the early data forwarding performed by the MN may be sending the data packet to the SN in a form of a PDCP PDU.

In a possible implementation, the MN sends these PDCP PDUs to the candidate SN through a user plane interface between the MN and the candidate SN. For example, the MN sends these data packets to the candidate SN according to the general packet radio service (general packet radio service, GPRS) tunneling protocol user plane (GPRS tunneling protocol user plane, GTP-U) protocol.

In addition, a sequence number (sequence number, SN) corresponding to the data packet may be further carried in the early data forwarding. For example, a GTP-U extension header may carry a new radio user plane (new radio user plane, NR-U) sequence number corresponding to the data packet. Generally, the MN allocates consecutive NR-U sequence numbers to all the forwarded data packets, and may learn, by using the carried NR-U sequence numbers corresponding to the data packets, the data packets on which the early data forwarding is performed.

After the early data forwarding is performed, the MN may send the indication information #1 to the candidate SN based on a current status of sending data to the terminal device, to indicate which data packets on the MN terminated SCG bearer and/or the MN terminated split bearer in the early data forwarding are to be discarded or ignored.

A sending occasion for the indication information #1 is not limited. For example, the indication information #1 may be sent when a preset condition is met. The preset condition may be a time limitation (for example, periodic sending), may be a data amount limitation (for example, a comparison between a data amount and a threshold or a threshold range), or may be a limitation in another respect.

For example, in a possible case, the MN may periodically send the indication information #1. For another example, in another possible case, when an amount of downlink data sent by the MN to the terminal device reaches a specific threshold, the MN sends the indication information #1 to the candidate SN. For another example, in another possible case, after downlink data sent by the MN to the terminal device is correctly received by the terminal device, the MN sends the indication information #1 to the candidate SN.

In addition, a form of the indication information #1 is not limited either. In a possible form, the indication information #1 may be in a form of one or more sequence numbers.

In a possible manner, the indication information #1 may be one sequence number, for example, denoted as a sequence number #A. For example, the sequence number #A may indicate that the candidate SN needs to discard data packets whose corresponding sequence numbers are lower than the sequence number #A and that are in previously forwarded data packets (for example, PDCP PDUs) (where even a data packet corresponding to the sequence number #A may be discarded). In other words, if the MN needs to indicate to discard or ignore the data packets whose corresponding sequence numbers are lower than the sequence number #A (even indicate that the data packet corresponding to the sequence number #A may be discarded), the MN may indicate the sequence number #A to the candidate SN. If the candidate SN has not sent, to the terminal device, the data packets whose corresponding sequence numbers are lower than the sequence number #A (and even the data packet corresponding to the sequence number #A), the candidate SN does not send these data packets (namely, the data packets whose corresponding sequence numbers are lower than the sequence number #A and even the data packet corresponding to the sequence number #A) to the terminal device. By way of example instead of limitation, the candidate SN may discard these data packets (namely, the data packets whose corresponding sequence numbers are lower than the sequence number #A and even the data packet corresponding to the sequence number #A), or may directly ignore these data packets.

In another possible manner, the indication information #1 may be a plurality of sequence numbers, for example, in a form of a sequence number list. For example, the sequence number list may indicate that the candidate SN needs to discard data packets that correspond to the sequence numbers in the sequence number list and that are in previously forwarded data packets (for example, PDCP PDUs). In other words, the MN may indicate the sequence number corresponding to the data packet to be discarded or ignored. If the candidate SN has not sent, to the terminal device, the data packets corresponding to the sequence numbers in the sequence number list, the candidate SN does not send these data packets (namely, the data packets corresponding to the sequence numbers in the sequence number list) to the terminal device. By way of example instead of limitation, the candidate SN may discard these data packets (namely, the data packets corresponding to the sequence numbers in the sequence number list), or may directly ignore these data packets.

In another possible manner, the indication information #1 may be blocks corresponding to a plurality of data packets, a start sequence number of the block corresponding to each data packet, and a quantity of data packets in the block. Data packets corresponding to each block are data packets corresponding to a plurality of consecutive sequence numbers starting from the start sequence number. For example, a quantity of downlink blocks to be discarded (DL discard number of blocks), a start SN of data packets (such as NR PDCP PDUs) corresponding to each block (DL discard NR PDCP PDU SN start), and a size corresponding to each block (discarded block size) are carried. The information may indicate that the candidate SN needs to discard data packets that correspond to the sequence numbers in these blocks and that are in previously forwarded data packets (for example, PDCP PDUs). In other words, the MN may indicate the sequence number corresponding to the data packet to be discarded or ignored. If the candidate SN has not sent, to the terminal device, the data packets corresponding to these sequence numbers, the candidate SN does not send these data packets (namely, the data packets corresponding to these sequence numbers) to the terminal device. By way of example instead of limitation, the candidate SN may discard these data packets (namely, the data packets corresponding to these sequence numbers), or may directly ignore these data packets.

It should be understood that the foregoing two manners are merely examples for description. This is not limited. For example, the MN may alternatively indicate, to the candidate SN, sequence numbers corresponding to data packets to be reserved, and the candidate SN may discard or ignore a data packet other than these data packets (namely, the sequence numbers corresponding to the data packets that the MN indicates to reserve).

It should be further understood that, in a future protocol, a name indicating a same function as the indication information #1 is applicable to embodiments of this application. For example, the indication information #1 may alternatively be early data forwarding information.

Optionally, the MN may further indicate, to the candidate SN, a DRB corresponding to the indication information #1. For example, information sent by the MN to the candidate SN may carry a DRB list of the MN terminated SCG bearer and/or the MN terminated split bearer. The DRB list may include a DRB ID of each DRB, and may further include information about the forwarded downlink data packet, where the indication information #1 indicates that the candidate SN may discard the forwarded downlink data packet.

It should be understood that the foregoing information (for example, the indication information #1 and/or the DRB corresponding to the indication information #1) may be sent through a user plane between the MN and the candidate SN (for example, carried in the GTP-U protocol), or may be sent through a control plane between the MN and the candidate SN (where for example, the MN sends a message to the candidate SN, and for example, the MN includes the foregoing information in an early status transfer (early status transfer) message).

Optionally, if the information is sent through the user plane between the MN and the candidate SN, because a GTP-U protocol tunnel established on the user plane is for each bearer, all indication information #1 may not need to carry a DRB ID.

Optionally, the MN may further send indication information #2 to the candidate SN, to indicate that the MN can perform or supports performing early data forwarding on the MN terminated SCG bearer and the MN terminated split bearer. For example, before the MN performs early data forwarding oriented to the candidate SN, the MN sends indication information to the candidate SN, to indicate that the MN can perform or supports performing early data forwarding on one or both of the MN terminated SCG bearer and the MN terminated split bearer. For example, the indication information #2 may be sent through a control plane interface between the MN and the candidate SN, or may be sent through a user plane interface between the MN and the candidate SN. This is not limited.

It should be understood that, in the example shown in FIG. 9, the MN terminated SCG bearer is an MN terminated SCG bearer in the CPA configured by a network side for the terminal device. In the example shown in FIG. 9, the MN terminated split bearer is an MN terminated split bearer in the CPA configured by the network side for the terminal device.

It should be further understood that the MN may send the indication information #1 to the candidate SN for a plurality of times. For example, the MN may periodically send the indication information #1 to the candidate SN. In this way, the candidate SN may determine, based on the received plurality of pieces of indication information #1, to discard or ignore a data packet that each piece of indication information #1 indicates to discard or ignore. Alternatively, the candidate SN may determine, based on latest received indication information #1, which data packets are to be discarded or ignored. For example, if the indication information #1 is one sequence number, for example, the sequence number #A, the candidate SN may determine, based on the last received indication information #1, to discard or ignore a data packet whose corresponding sequence number is lower than the sequence number #A.

It should be further understood that, in the example shown in FIG. 9, interaction between the MN and the candidate SN 1 is mainly used as an example for description. This is not limited. For example, early data forwarding may also be performed between the MN and the candidate SN 2, and the MN may also send the indication information #1 to the candidate SN 2 for one or more times. For another example, after the MN determines that the terminal device is to access a candidate SN that meets a condition, the MN may perform early data forwarding with the candidate SN that meets the condition, and may further send the indication information #1 to the candidate SN that meets the condition.

950: The terminal device accesses the candidate SN that meets the condition.

When the terminal device determines that the trigger condition of the candidate PSCell is met, the terminal device accesses the candidate PSCell. For example, the terminal device performs a random access process with the candidate PSCell. As shown in FIG. 9, assuming that a trigger condition of a candidate PSCell in the candidate SN 1 is met, the terminal device accesses the candidate SN 1.

The foregoing is merely an example for description. Step 950 is not limited in this embodiment of this application. For example, for step 950, refer to a conventional technology or a manner in the future.

960: The candidate SN sends downlink data to the terminal device.

After the terminal device accesses the candidate SN, the candidate SN may send the downlink data to the terminal device. For example, the candidate SN may send the downlink data to the terminal device based on a status of the early data forwarding. For another example, the candidate SN may send the downlink data to the terminal device based on a status of the early data forwarding and the indication information #1.

The following uses the MN terminated SCG bearer or the MN terminated split bearer as an example to describe the following several possible cases.

In a possible case, after the terminal device accesses the candidate SN, for the MN terminated SCG bearer or the MN terminated split bearer, the candidate SN may send the downlink data to the terminal device based on the data in the early data forwarding performed by the MN.

Alternatively, in another possible case, after the terminal device accesses the candidate SN, for the MN terminated SCG bearer or the MN terminated split bearer, the candidate SN may send the downlink data to the terminal device based on the data in the early data forwarding performed by the MN and the indication information #1 (for example, the last received indication information #1). For example, the candidate SN does not send, to the terminal device, the data packet (for example, the PDCP PDU) that the indication information #1 (for example, the last received indication information #1) indicates to discard, and the candidate SN may discard or directly ignore these data packets that need to be discarded.

Alternatively, in another possible case, after the MN learns that the terminal device accesses the candidate SN (where for example, the MN receives, from the terminal device, an indication indicating that the terminal device has met the trigger condition of the candidate PSCell; or after the terminal device successfully accesses the candidate SN, the candidate SN sends, to the MN, an indication indicating the access of the terminal device), the MN sends the indication information #1 to the candidate SN, and the candidate SN sends the downlink data to the terminal device based on the data in the early data forwarding performed by the MN early and the indication information #1. For example, after the MN learns that the terminal device accesses the candidate SN, for the MN terminated SCG bearer and/or the MN terminated split bearer, the MN may send indication information #1 to the candidate SN, to indicate which data packets on the MN terminated SCG bearer and/or the MN terminated split bearer in the early data forwarding are to be discarded or ignored (same as the content in step 940).

With reference to steps 910 to 960 shown in FIG. 9, the foregoing describes an example of the CPA procedure. It should be understood that the foregoing steps are merely examples for description. This is not strictly limited. In addition, sequence numbers of the foregoing processes do not mean execution sequences. The execution sequences of the processes should be determined according to functions and internal logic of the processes, and should not be construed as any limitation on implementation processes of embodiments of this application.

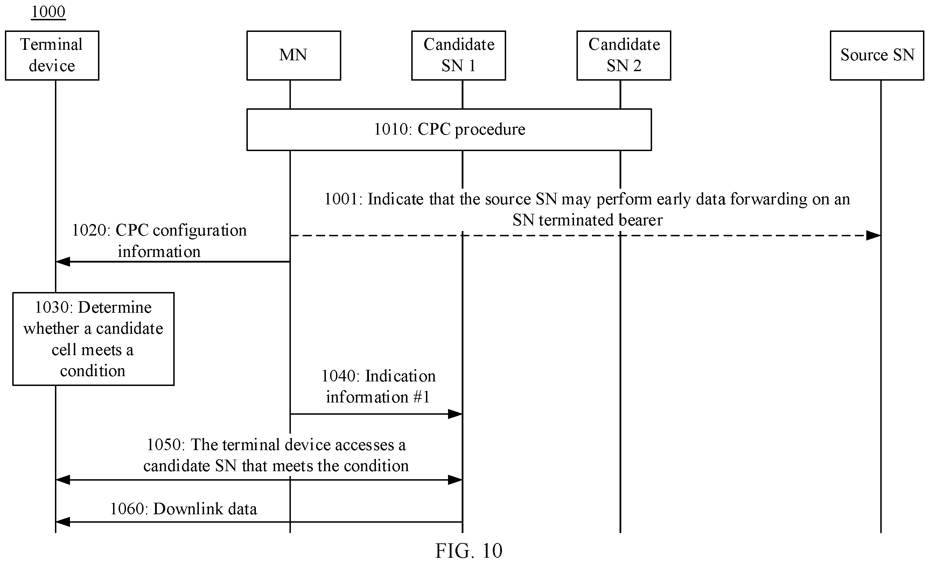

FIG. 10 is a schematic diagram of an MN triggered conditional PSCell change (conditional PSCell change, CPC) procedure applicable to embodiments of this application.

As shown in FIG. 10, the method 1000 is mainly described by using interaction between a terminal device, an MN, a candidate SN 1, a candidate SN 2, and a source SN as an example. For differentiation, the source SN represents an SN that has been currently configured for the terminal device. It should be understood that the source SN is a name for differentiation. For example, the source SN may alternatively be denoted as a current SN. A specific naming manner of the source SN does not limit the protection scope of embodiments of this application. The method 1000 shown in FIG. 10 may include the following steps.

1010: The MN performs a CPC procedure with the candidate SNs.

In other words, the MN performs the conditional PSCell change procedure with the candidate SNs. As shown in FIG. 10, the MN performs the conditional PSCell change procedure (namely, the CPC procedure) with the candidate SN 1 and the candidate SN 2.

For example, the MN sends an SN addition request message to each candidate SN. For example, the SN addition request message may carry indication information indicating that the current SN addition request message is for a conditional SN change. Alternatively, for example, regardless of a conditional SN addition or a conditional SN change, the SN addition request message indicates that the current SN addition request message is for the conditional SN change.

The candidate SN may send a response message for the SN addition request message to the MN. For example, the candidate SN may feed back an SN addition request acknowledgment message to the MN. For example, the SN addition request acknowledgment message may carry indication information indicating that the current SN addition request acknowledgment message is a response for the conditional SN change. For example, the SN addition request acknowledgment message may further carry wireless configuration information that corresponds to a candidate PSCell and that is configured by the candidate SN for the terminal device. For example, the wireless configuration information that corresponds to the candidate PSCell and that is configured by the candidate SN for the terminal device is carried, in a form of an RRC reconfiguration message configured by the candidate SN for the terminal device, in the SN addition request acknowledgment message.

The foregoing is merely an example for description. Step 1010 is not limited in this embodiment of this application. For example, for step 1010, refer to a conventional technology or a manner in the future.

For example, the method 1000 may further include step 1001.

1001: The MN may indicate to the source SN that the source SN may perform early data forwarding on an SN terminated bearer.

In other words, after step 1010, the MN may send indication information to the source SN, to indicate that the source SN may perform early data forwarding on the SN terminated bearer (where the SN terminated bearer herein is before a CPC, in other words, these bearers are SN terminated bearers before the CPC), to forward a data packet that is in the source SN and that is to be sent to the terminal device. Alternatively, the MN may send indication information to the source SN, to indicate that the MN triggers a CPC. In this way, the source SN may determine whether to perform early data forwarding on the SN terminated bearer, in other words, whether to perform early data forwarding on the SN terminated bearer is determined by the source SN.

It should be understood that step 1001 is merely an example. This is not limited. For example, the source SN may send indication information to the MN, to indicate that the early data forwarding may be performed on the SN terminated bearer.

Before step 1001, the method 1000 may further include step 1020.

1020: The MN sends CPC configuration information to the terminal device.

For example, the MN sends an RRC reconfiguration message to the terminal device, where the RRC reconfiguration message includes the CPC configuration information.

The CPC configuration information may include, for example, one or more of the following: a trigger condition configured by the MN for each candidate PSCell, the wireless configuration information that corresponds to the candidate PSCell and that is configured by the candidate SN for the terminal device, and wireless configuration information, of an MCG, that corresponds to each candidate PSCell and that is configured by the MN for the terminal device when the terminal device accesses the candidate PSCell. For the trigger condition, refer to the descriptions in step 920. Details are not described herein again.

When the terminal device selects, as a final PSCell, a specific candidate PSCell that meets a condition, the terminal device may use wireless configuration information corresponding to the candidate PSCell. If the CPC configuration includes the wireless configuration information, of the MCG, that corresponds to each candidate PSCell and that is configured by the MN for the terminal device, the terminal device also uses the wireless configuration information, of the MCG, that corresponds to the candidate PSCell.

The foregoing is merely an example for description. Step 1020 is not limited in this embodiment of this application. For example, for step 1020, refer to a conventional technology or a manner in the future.

1030: The terminal device determines whether the candidate cell meets the condition.

In other words, the terminal device determines whether the candidate PSCell meets the trigger condition corresponding to the conditional PSCell change.

For example, the terminal device receives the CPC configuration information from the MN, and the terminal device determines, based on the candidate PSCell and the corresponding trigger condition in the CPC configuration information, whether the trigger condition corresponding to the PSCell is met.

The foregoing is merely an example for description. Step 1030 is not limited in this embodiment of this application. For example, for step 1030, refer to a conventional technology or a manner in the future.

1040: The MN sends indication information #1 to the candidate SN, to indicate to discard or ignore a part or all of data packets in early data forwarding.

As shown in FIG. 10, the MN sends the indication information #1 to the candidate SN 1, to indicate to discard or ignore the part or all of the data packets in the early data forwarding.

In other words, in step 1040, the MN sends the indication information #1 to the candidate SN, where the indication information #1 indicates which data packets on an MN terminated SCG bearer and/or an MN terminated split bearer in the early data forwarding are to be discarded or ignored.

In an example, before step 1040, the MN may perform early data forwarding oriented to the candidate SN (for example, the candidate SN 1) on the MN terminated SCG bearer. In step 1040, the MN sends the indication information #1 to the candidate SN (for example, the candidate SN 1), to indicate which data packets on the MN terminated SCG bearer in the early data forwarding are to be discarded or ignored.

In another example, before step 1040, the MN may perform early data forwarding oriented to the candidate SN (for example, the candidate SN 1) on the MN terminated split bearer. In step 1040, the MN sends the indication information #1 to the candidate SN (for example, the candidate SN 1), to indicate which data packets on the MN terminated split bearer in the early data forwarding are to be discarded or ignored.

Optionally, for the bearers that are the SN terminated bearers before the CPC, in the CPC procedure, these bearers become MN terminated split bearers or MN terminated SCG bearers, and the source SN may perform, through step 1001, early data forwarding oriented to the MN on the data packet. Then, according to the descriptions in step 1040, the MN may perform early data forwarding and indicate which data packets on the MN terminated split bearer in the early data forwarding are to be discarded or ignored. In this case, the MN may determine, based on an indication sent by the source SN to the MN, which data packets on the SN terminated bearer in the early data forwarding are to be discarded or ignored. For example, the source SN sends some indication information to the MN, to indicate which data packets on the SN terminated bearer in the early data forwarding are to be discarded or ignored. Specific indication information is similar to the indication information #1. A form of the data packet in the early data forwarding between the source SN and the MN may be a PDCP SDU. The MN may generate, based on the indication of the source SN, the indication information #1 to be sent to the candidate SN.

Optionally, for bearers that are MN terminated bearers before the CPC, in the CPC procedure, these MN terminated bearers become MN terminated split bearers or MN terminated SCG bearers. In this case, the MN may generate the indication information #1.

Step 1040 is the same as step 940 in the foregoing CPA procedure, and details are not described herein again.

It should be understood that, in the example shown in FIG. 10, the MN terminated SCG bearer is an MN terminated SCG bearer in the CPC configured by a network side for the terminal device. In the example shown in FIG. 10, the MN terminated split bearer is an MN terminated split bearer in the CPC configured by the network side for the terminal device. Before the MN triggered CPC, these bearers may be SN terminated MCG/SCG/split bearers, or may be MN terminated MCG/SCG/split bearers.

1050: The terminal device accesses a candidate SN that meets a condition.

When the terminal device determines that the trigger condition of the candidate PSCell is met, the terminal device accesses the candidate PSCell. For example, the terminal device performs a random access process with the candidate PSCell. As shown in FIG. 10, assuming that a trigger condition of a candidate PSCell in the candidate SN 1 is met, the terminal device accesses the candidate SN 1.

Step 1050 is the same as step 950 in the foregoing CPA procedure, and details are not described herein again.

1060: The candidate SN sends downlink data to the terminal device.

After the terminal device accesses the candidate SN, the candidate SN may send the downlink data to the terminal device. For example, the candidate SN may send the downlink data to the terminal device based on a status of the early data forwarding. For another example, the candidate SN may send the downlink data to the terminal device based on a status of the early data forwarding and the indication information #1.

Step 1060 is the same as step 960 in the foregoing CPA procedure, and details are not described herein again.

With reference to steps 1010 to 1060 shown in FIG. 10, the foregoing describes an example of the MN triggered CPC procedure. It should be understood that the foregoing steps are merely examples for description. This is not strictly limited. In addition, sequence numbers of the foregoing processes do not mean execution sequences. The execution sequences of the processes should be determined according to functions and internal logic of the processes, and should not be construed as any limitation on implementation processes of embodiments of this application.

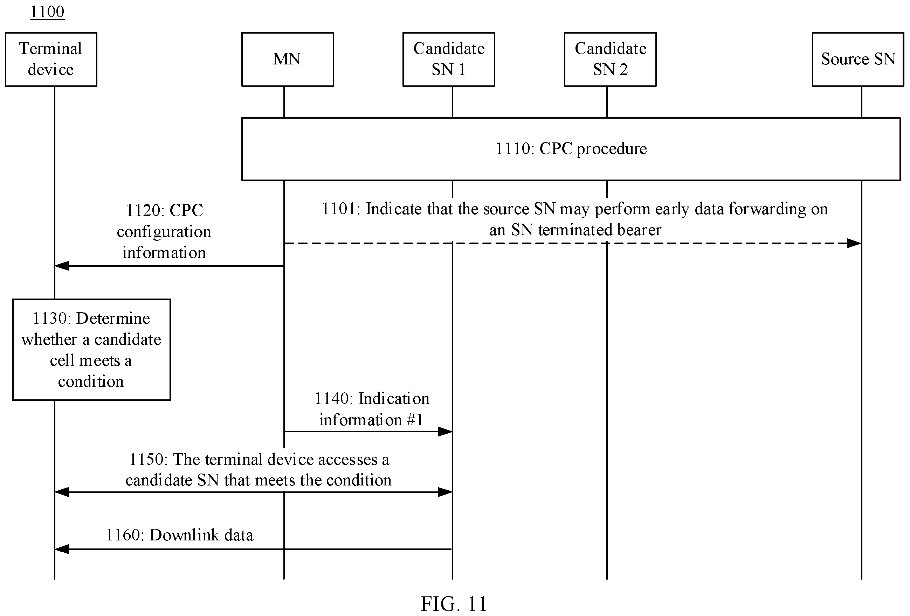

FIG. 11 is a schematic diagram of an SN triggered CPC procedure applicable to embodiments of this application.

As shown in FIG. 11, the method 1100 is mainly described by using interaction between a terminal device, an MN, a candidate SN 1, a candidate SN 2, and a source SN as an example. For differentiation, the source SN represents an SN that has been currently configured for the terminal device. It should be understood that the source SN is a name for differentiation. For example, the source SN may alternatively be denoted as a current SN. A specific naming manner of the source SN does not limit the protection scope of embodiments of this application. The method 1100 shown in FIG. 11 may include the following steps.

1110: The source SN performs a CPC procedure with the candidate SNs.

In other words, the source SN performs the conditional PSCell change procedure with the candidate SNs. As shown in FIG. 11, the MN performs the conditional PSCell change procedure (namely, the CPC procedure) with the candidate SN 1, the candidate SN 2, and the source SN.

For example, the source SN sends an SN change required message to the MN. For example, the SN change required message may carry indication information indicating that the current SN change required message is for a conditional SN change. The SN change required message may carry an identifier of the candidate SN.

The MN sends an SN addition request message to the candidate SN. For example, the SN addition request message may carry indication information indicating that the current SN addition request message is for the conditional SN change. Alternatively, for example, regardless of a conditional SN addition or the conditional SN change, the SN addition request message indicates that the current SN addition request message is for the conditional SN change.

The candidate SN may send a response message for the SN addition request message to the MN. For example, the candidate SN may feed back an SN addition request acknowledgment message to the MN. For example, the SN addition request acknowledgment message may carry indication information indicating that the current SN addition request acknowledgment message is a response for the conditional SN change. For example, the SN addition request acknowledgment message may further carry wireless configuration information that corresponds to a candidate PSCell and that is configured by the candidate SN for the terminal device. For example, the wireless configuration information that corresponds to the candidate PSCell and that is configured by the candidate SN for the terminal device may be carried, in a form of an RRC reconfiguration message configured by the candidate SN for the terminal device, in the SN addition request acknowledgment message.

The foregoing is merely an example for description. Step 1110 is not limited in this embodiment of this application. For example, for step 1110, refer to a conventional technology or a manner in the future.

For example, the method 1100 may further include step 1101.

1101: The MN may indicate to the source SN that the source SN may perform early data forwarding on an SN terminated bearer.

In other words, after step 1110, the MN may send indication information to the source SN, to indicate that the source SN may perform early data forwarding on the SN terminated bearer (where the SN terminated bearer herein is before a CPC, in other words, these bearers are SN terminated bearers before the CPC), to forward a data packet that is in the source SN and that is to be sent to the terminal device. Alternatively, the MN may send indication information to the source SN, to indicate that the MN triggers a CPC. In this way, the source SN may determine whether to perform early data forwarding on the SN terminated bearer, in other words, whether to perform early data forwarding on the SN terminated bearer is determined by the source SN.

It should be understood that step 1101 is merely an example. This is not limited. For example, the source SN may send indication information to the MN, to indicate that the early data forwarding may be performed on the SN terminated bearer.

Before step 1101, the method 1100 may further include step 1120.

1120: The MN sends CPC configuration information to the terminal device.

Step 1120 is the same as step 1020 in the foregoing MN triggered CPC. Details are not described herein again.

1130: The terminal device determines whether the candidate cell meets a condition.

In other words, the terminal device determines whether the candidate PSCell meets a trigger condition corresponding to the conditional PSCell change.

Step 1130 is the same as step 1030 in the foregoing MN triggered CPC. Details are not described herein again.

1140: The MN sends indication information #1 to the candidate SN, to indicate to discard or ignore a part or all of data packets in early data forwarding.

In other words, in step 1140, the MN sends the indication information #1 to the candidate SN, where the indication information #1 indicates which data packets on an MN terminated SCG bearer and/or an MN terminated split bearer in the early data forwarding are to be discarded or ignored.

In an example, before step 1140, the MN may perform early data forwarding oriented to the candidate SN (for example, the candidate SN 1) on the MN terminated SCG bearer. In step 1140, the MN sends the indication information #1 to the candidate SN (for example, the candidate SN 1), to indicate which data packets on the MN terminated SCG bearer in the early data forwarding are to be discarded or ignored.

In another example, before step 1140, the MN may perform early data forwarding oriented to the candidate SN (for example, the candidate SN 1) on the MN terminated split bearer. In step 1140, the MN sends the indication information #1 to the candidate SN (for example, the candidate SN 1), to indicate which data packets on the MN terminated split bearer in the early data forwarding are to be discarded or ignored.

Optionally, for the bearers that are the SN terminated bearer before the CPC, in the CPC procedure, these bearers become MN terminated split bearers or MN terminated SCG bearers, and the source SN performs, through step 1101, early data forwarding oriented to the MN on the data packet. Then, according to the descriptions in step 1140, the MN may perform early data forwarding and indicate which data packets on the MN terminated split bearer in the early data forwarding are to be discarded or ignored. In this case, the MN may determine, based on an indication sent by the source SN to the MN, which data packets on the SN terminated bearer in the early data forwarding are to be discarded or ignored. For example, the source SN sends some indication information to the MN, to indicate which data packets on the SN terminated bearer in the early data forwarding are to be discarded or ignored. Specific indication information is similar to the indication information #1. A form of the data packet in the early data forwarding between the source SN and the MN may be a PDCP SDU. The MN may generate, based on the indication of the source SN, the indication information #1 to be sent to the candidate SN.

Optionally, for bearers that are MN terminated bearers before the CPC, in the CPC procedure, these MN terminated bearers become MN terminated split bearers or MN terminated SCG bearers. In this case, the MN may generate the indication information #1.

Step 1140 is the same as step 1040 in the foregoing MN triggered CPC. Details are not described herein again.

1150: The terminal device accesses a candidate SN that meets a condition.

When the terminal device determines that the trigger condition of the candidate PSCell is met, the terminal device accesses the candidate PSCell. For example, the terminal device performs a random access process with the candidate PSCell. As shown in FIG. 11, assuming that a trigger condition of a candidate PSCell in the candidate SN 1 is met, the terminal device accesses the candidate SN 1.

Step 1150 is the same as step 1050 in the foregoing MN triggered CPC. Details are not described herein again.

1160: The candidate SN sends downlink data to the terminal device.

Step 1160 is the same as step 1060 in the foregoing MN triggered CPC. Details are not described herein again.

With reference to steps 1110 to 1160 shown in FIG. 11, the foregoing describes an example of the SN triggered CPC procedure. It should be understood that the foregoing steps are merely examples for description. This is not strictly limited. In addition, sequence numbers of the foregoing processes do not mean execution sequences. The execution sequences of the processes should be determined according to functions and internal logic of the processes, and should not be construed as any limitation on implementation processes of embodiments of this application.

With reference to FIG. 9 to FIG. 11, the foregoing provides the possible procedures applicable to the embodiment shown in the method 700. According to the foregoing solution, for the MN terminated SCG bearer and/or the MN terminated split bearer, the MN may perform early data forwarding oriented to the SN. In addition, the MN may further send the indication information #1 to the SN, to indicate which data packets in the early data forwarding are to be discarded or ignored. Therefore, after the terminal device accesses the candidate PSCell, the candidate PSCell may send downlink data on these bearers to the terminal device, to reduce a transmission delay of the downlink data on these bearers.

With reference to FIG. 12 to FIG. 14, the following describes possible procedures applicable to the embodiment shown in the method 800.

FIG. 12 is a schematic flowchart of a scenario in which a CPAC is configured before a handover and then an MN handover occurs and that is applicable to embodiments of this application.

As shown in FIG. 12, the method 1200 is mainly described by using interaction between a terminal device, a source MN, a candidate SN 1, a candidate SN 2, and a target MN as an example. For differentiation, the source MN represents an MN that is before the handover, and the target MN represents an MN that is after the handover. It should be understood that the source MN and the target MN are names for differentiation, and a specific naming manner of the source MN and the target MN does not constitute a limitation on the protection scope of embodiments of this application. The method 1200 shown in FIG. 12 may include the following steps.

1210: A network side configures the CPAC for the terminal device.

Step 1210 is not limited in this embodiment of this application. For example, refer to the descriptions of steps 910 and 920, the descriptions of steps 1010 and 1020, or the descriptions of steps 1110 and 1120. For step 1210, refer to a conventional technology or a manner in the future. Details are not described herein.

1220: The source MN sends a handover request message to the target MN.

The source MN determines to hand over the terminal device to the target MN, and the source MN sends the handover request message to the target MN. The handover request message may include one or more of the following: an identifier of the candidate SN and an identifier of the terminal device in the candidate SN. For example, the identifier of the terminal device in the candidate SN may be an identifier, for example, an XnAP ID or an X2AP ID, allocated by the candidate SN to the terminal device over a control plane interface established between the MN and the candidate SN for the terminal device. Optionally, the foregoing information (namely, the identifier of the candidate SN and the identifier of the terminal device in the candidate SN) may be referred to as context reference information of the terminal device in the candidate SN. It should be noted that the information is for each candidate SN, in other words, the handover request message carries the foregoing information of the terminal device in each candidate SN.

It should be understood that the foregoing provides descriptions by using an example in which the context reference information of the terminal device in the candidate SN is carried in the handover request message. This is not limited. For example, the context reference information of the terminal device in the candidate SN may alternatively be separately sent to the target MN.

1230: The target MN sends an SN addition request message to the SNs.

As shown in FIG. 12, the target MN may send the SN addition request message to the candidate SN 1 and the candidate SN 2.

The following provides descriptions with reference to several scenarios.

### Scenario 1: Scenario in which a CPA is configured both before and after the handover

The target MN determines to configure the CPA for the terminal device.

If a candidate SN that the target MN determines to configure is the same as a candidate SN that is before the handover, in other words, the target MN determines to maintain one or more candidate SNs, the target MN sends an SN establishment request message to the candidate SN, where the message carries an identifier, of the terminal device, that is in the candidate SN and that is before the handover.

For example, the target MN may learn, based on the identifier of the candidate SN sent by the source MN (for example, the identifier of the candidate SN carried in the handover request message sent by the source MN), whether the candidate SN that is before the handover is the same as the candidate SN that is after the handover.

It should be understood that, when there are a plurality of candidate SNs, the target MN may separately perform determining.

### Scenario 2: Scenario in which a CPA is configured before the handover and DC is configured after the handover

The target MN determines to configure the DC for the terminal device, to be specific, configure one SN (which is not referred to as a candidate SN in this case, but may be referred to as, for example, the SN or a target SN) for the terminal device.

If the SN that the target MN determines to configure is the same as a candidate SN that is before the handover, in other words, the target MN determines to use a specific candidate SN as the configured SN, the target MN sends an SN establishment request message to the SN, where the message carries an identifier, of the terminal device, that is in the candidate SN and that is before the handover.

For example, the target MN may learn, based on the identifier of the candidate SN sent by the source MN (for example, the identifier of the candidate SN carried in the handover request message sent by the source MN), whether the SN that is before the handover is the same as the SN that is after the handover.

It should be understood that, when a plurality of SNs are configured, the target MN may separately perform determining.

### Scenario 3: Scenario in which a CPC is configured both before and after the handover

### (1) Scenario in which an MN triggered CPC is configured both before and after the handover

The target MN determines to configure the MN triggered CPC for the terminal device.

If a candidate SN that the target MN determines to configure is the same as a candidate SN that is before the handover, in other words, the target MN determines to maintain one or more candidate SNs, the target MN sends an SN establishment request message to the candidate SN, where the message carries an identifier, of the terminal device, that is in the candidate SN and that is before the handover.

For example, the target MN may learn, based on the identifier of the candidate SN sent by the source MN (for example, the identifier of the candidate SN carried in the handover request message sent by the source MN), whether the candidate SN that is before the handover is the same as the candidate SN that is after the handover.

It should be understood that, when there are a plurality of candidate SNs, the target MN may separately perform determining.

### (2) Scenario in which an SN triggered CPC is configured both before and after the handover

The target MN sends an SN establishment request message to a target SN that is after the handover (namely, an SN that triggers the CPC after the handover). The SN establishment request message may carry an identifier of the candidate SN that is before the handover. In addition, the SN establishment request message may further carry the identifier of the terminal device in each candidate SN (one or more candidate SNs). For the SN triggered CPC, if a candidate SN determined by the target SN is the same as the candidate SN that is before the handover, there may be the following two cases:

In a possible case, if the target SN obtains the identifier of the terminal device in each candidate SN (the one or more candidate SNs) from the target MN, using one of the candidate SNs as an example, the target SN sends the identifier of the terminal device in the candidate SN to the candidate SN. For example, the target SN directly sends the identifier of the terminal device in the candidate SN to the candidate SN. Alternatively, the target MN may send the identifier of the terminal device in the candidate SN to the candidate SN (where for example, the target SN first sends the identifier to the target MN, and then the target MN sends the identifier to the candidate SN).

In another possible case, if the target SN does not obtain the identifier of the terminal device in each candidate SN (the one or more candidate SNs) from the target MN, using one of the candidate SNs as an example, the target SN sends the identifier of the candidate SN to the target MN, the target MN obtains, based on the identifier of the candidate SN, an identifier, of the terminal device, that is in the candidate SN and that is before the handover, and then the target MN sends the identifier of the terminal device in the candidate SN to the candidate SN.

It should be understood that, when there are a plurality of candidate SNs, the target MN may separately perform determining.

### (3) Scenario in which an SN triggered CPC is configured before the handover and an MN triggered CPC is configured after the handover

The target MN determines to configure the MN triggered CPC for the terminal device.

If a candidate SN that the target MN determines to configure is the same as a candidate SN that is before the handover, in other words, the target MN determines to maintain one or more candidate SNs, the target MN sends an SN establishment request message to the candidate SN, where the message carries an identifier, of the terminal device, that is in the candidate SN and that is before the handover.

For example, the target MN may learn, based on the identifier of the candidate SN sent by the source MN (for example, the identifier of the candidate SN carried in the handover request message sent by the source MN), whether the candidate SN that is before the handover is the same as the candidate SN that is after the handover.

It should be understood that, when there are a plurality of candidate SNs, the target MN may separately perform determining.

### (4) Scenario in which an MN triggered CPC is configured before the handover and an SN triggered CPC is configured after the handover

The target MN sends an SN establishment request message to a target SN that is after the handover (namely, an SN that triggers the CPC after the handover). The SN establishment request message may carry an identifier of the candidate SN that is before the handover. In addition, the SN establishment request message may further carry the identifier of the terminal device in each candidate SN (one or more candidate SNs). For the SN triggered CPC, if a candidate SN determined by the target SN is the same as the candidate SN that is before the handover, there may be the following two cases:

In a possible case, if the target SN obtains the identifier of the terminal device in each candidate SN (the one or more candidate SNs) from the target MN, using one of the candidate SNs as an example, the target SN sends the identifier of the terminal device in the candidate SN to the candidate SN. For example, the target SN directly sends the identifier of the terminal device in the candidate SN to the candidate SN. Alternatively, the target MN may send the identifier of the terminal device in the candidate SN to the candidate SN (where for example, the target SN first sends the identifier to the target MN, and then the target MN sends the identifier to the candidate SN).

In another possible case, if the target SN does not obtain the identifier of the terminal device in each candidate SN (the one or more candidate SNs) from the target MN, using one of the candidate SNs as an example, the target SN sends the identifier of the candidate SN to the target MN, the target MN obtains, based on the identifier of the candidate SN, an identifier, of the terminal device, that is in the candidate SN and that is before the handover, and then the target MN sends the identifier of the terminal device in the candidate SN to the candidate SN.

It should be understood that the foregoing uses one candidate SN as an example for description. When there are the plurality of candidate SNs, the target MN may separately perform determining.

### Scenario 4: Scenario in which a CPC is configured before the handover and a CPA is configured after the handover

The target MN determines to configure the CPA for the terminal device.

If a candidate SN that the target MN determines to configure is the same as a candidate SN that is before the handover, in other words, the target MN determines to maintain one or more candidate SNs, the target MN sends an SN establishment request message to the candidate SN, where the message carries an identifier, of the terminal device, that is in the candidate SN and that is before the handover.

For example, the target MN may learn, based on the identifier of the candidate SN sent by the source MN (for example, the identifier of the candidate SN carried in the handover request message sent by the source MN), whether the candidate SN that is before the handover is the same as the candidate SN that is after the handover.

It should be understood that, when there are a plurality of candidate SNs, the target MN may separately perform determining.

For example, the foregoing solution may be applicable to a scenario in which an MN triggered CPC is configured before the handover and the CPA is configured after the handover, or may be applicable to a scenario in which an SN triggered CPC is configured before the handover and the CPA is configured after the handover.

### Scenario 5: Scenario in which a CPC is configured before the handover and DC is configured after the handover

The target MN determines to configure the DC for the terminal device, to be specific, configure one SN (which is not referred to as a candidate SN in this case, but may be referred to as, for example, the SN or a target SN) for the terminal device.

If the SN that the target MN determines to configure is the same as a candidate SN that is before the handover, in other words, the target MN determines to use a specific candidate SN as the configured SN, the target MN sends an SN establishment request message to the SN, where the message carries an identifier, of the terminal device, that is in the candidate SN and that is before the handover.

For example, the target MN may learn, based on the identifier of the candidate SN sent by the source MN (for example, the identifier of the candidate SN carried in the handover request message sent by the source MN), whether the SN that is before the handover is the same as the SN that is after the handover.

It should be understood that, when a plurality of SNs are configured, the target MN may separately perform determining.

For example, the foregoing solution may be applicable to a scenario in which an MN triggered CPC is configured before the handover and the DC is configured after the handover, or may be applicable to a scenario in which an SN triggered CPC is configured before the handover and the DC is configured after the handover.

With reference to the five scenarios, the foregoing describes a case in which the target MN sends the SN addition request message to the SN. It should be understood that, in different scenarios, adaptive adjustment may be performed based on a case of each scenario.

1240: The target MN sends a handover request response message to the source MN.

In addition, the target MN may further send indication information #3 to the source MN, to indicate to use or maintain information related to the terminal device in the candidate SN.

The information related to the terminal device in the candidate SN may include, for example, one or more of the following: a context of the terminal device in the candidate SN and information about early data forwarding previously performed by the candidate SN.

Optionally, the target MN may further send, to the source MN, an indication indicating candidate SNs, where contexts of the terminal device in the candidate SNs are to be maintained, or early data forwarding previously performed by the candidate SNs is to be reserved. For example, identifiers of the candidate SNs may be carried for indication. For example, the indication information #3 or the handover request response message carries an identifier of one or more candidate SNs. In this manner, it is indicated to maintain a context of the terminal device in the one or more candidate SNs or reserve early data forwarding previously performed by the one or more candidate SNs.

The indication information #3 may be carried in the handover request response message, or may be sent separately. This is not limited.

1250: The source MN sends an SN release request message to the candidate SN.

As shown in FIG. 12, the source MN may send the SN release request message to the candidate SN 1 and the candidate SN 2.

In addition, the source MN may further send the indication information #3 to the candidate SN, to indicate to use or maintain the information related to the terminal device in the candidate SN.

The indication information #3 may be carried in the SN release request message, or may be sent separately. This is not limited.

1260: The source MN indicates information about early data forwarding of the candidate SN to the target MN.

Optionally, the source MN sends information about early data forwarding of each candidate SN to the target MN.

The information about the early data forwarding of the candidate SN may include, for example, one or more of the following: data packets on which early data forwarding has been performed from the source MN to the candidate SN (for example, indicated by a PDCP SN or an NR-U sequence number) and data packets in the early data forwarding that are discardable by the candidate SN. Optionally, then, the target MN may notify the candidate SN of the data packets in the early data forwarding that are discardable. It should be understood that, early data forwarding of an SN terminated bearer may be included herein.

The following provides descriptions with reference to several scenarios.

### Scenario 1: Scenario in which the CPA is configured both before and after the handover

In this scenario, the source MN may send the information about the early data forwarding of the candidate SN to the target MN.

In this scenario, the source MN may forward data on the bearer to the target MN. For example, a downlink data packet that has not been correctly received by the terminal device is forwarded to the target MN. For another example, an uplink data packet that is received out of order from the terminal device side is forwarded to the target MN.

### Scenario 2: Scenario in which the CPA is configured before the handover and the DC is configured after the handover

In this scenario, at least the following two implementation solutions may be included.

Solution 1: The source MN continues to perform early data forwarding oriented to the candidate SN.

In this solution, the source MN does not need to send the information about the early data forwarding of the candidate SN to the target MN. After the source MN forwards, to the candidate SN, all data packets corresponding to the bearer that are received from a core network and that are before an end marker (end marker), the source MN may send indication information #4 to the candidate SN, to indicate that all the data packets corresponding to the bearer have been forwarded to the candidate SN. For example, the indication information #4 may be a user plane indication, for example, an end marker. Alternatively, the indication information #4 may be a control plane indication, in other words, the indication information #4 is sent to the candidate SN on a control plane. In this solution, the candidate SN that is before the handover is the SN that is after the handover.

In this embodiment of this application, for differentiation, the indication information #4 represents information indicating that all the data packets corresponding to the bearer have been forwarded to the candidate SN. An indication manner may be: giving an indication by using specific content in the indication information #4, or giving an indication through an action of sending the indication information #4. This is not limited.

In addition, the source MN may directly send the indication information #4 to the candidate SN, or may send the indication information #4 to the candidate SN through the target MN. After receiving the indication information #4, the candidate SN (where in this scenario, the candidate SN is also the SN that is after the handover) may start to send, to the terminal device, a new data packet that is directly received from the core network and that corresponds to the bearer. In this solution, the candidate SN may use the data packet in the early data forwarding previously received from the source MN as data that needs to be sent to the terminal device after the handover, to avoid a delay caused when the source MN forwards the data packet to the target MN and then the target MN sends the data packet to the SN.

### Solution 2: The source MN stops performing data forwarding oriented to the candidate SN.

In this solution, the source MN may send the information about the early data forwarding of the candidate SN to the target MN.

In this solution, the source MN may forward, to the target MN, a data packet that corresponds to the bearer and that is received from a core network. For example, for a bearer that is the SN terminated bearer after the handover, the source MN may forward, to the target MN, a data packet that corresponds to the bearer and that is received from the core network, and then the target MN forwards the data packet to the SN. For another example, for a bearer that is an MN terminated SCG bearer terminated or an MN terminated split bearer after the handover, the source MN may forward, to the target MN, a data packet that is received from the core network and that corresponds to the bearer. Then, the target MN processes the data packet (for example, changes the data packet from a PDCP SDU to a PDCP PDU), and sends the processed data packet to the SN. In this solution, the candidate SN that is before the handover is the SN that is after the handover.

It should be understood that the foregoing two solutions are merely examples for description. This is not limited. For example, the source MN may continue to forward a part of data packets to the candidate SN, and send a remaining data packet to the SN through the target MN.

### Scenario 3: Scenario in which the CPC is configured both before and after the handover

The scenario 3 is similar to the scenario 1 (namely, the scenario in which the CPA is configured both before and after the handover). For example, in the scenario 3, the source MN may forward data on the bearer to the target MN. For example, a downlink data packet that has not been correctly received by the terminal device is forwarded to the target MN. For another example, an uplink data packet that is received out of order from the terminal device side is forwarded to the target MN.

In addition, in the scenario 3, a device that triggers the CPC is not limited. For example, the scenario 3 may be the scenario in which the MN triggered CPC is configured both before and after the handover. Alternatively, the scenario 3 may be the scenario in which the SN triggered CPC is configured both before and after the handover. Alternatively, the scenario 3 may be the scenario in which the MN triggered CPC is configured before the handover and the SN triggered CPC is configured after the handover. Alternatively, the scenario 3 may be the scenario in which the SN triggered CPC is configured before the handover and the MN triggered CPC is configured after the handover.

### Scenario 4: Scenario in which the CPC is configured before the handover and the CPA is configured after the handover

In this scenario, the source MN may send the information about the early data forwarding of the candidate SN to the target MN.

In this scenario, the source MN may forward data on the bearer to the target MN. For example, a downlink data packet that has not been correctly received by the terminal device is forwarded to the target MN. For another example, an uplink data packet that is received out of order from the terminal device side is forwarded to the target MN.

In the scenario 4, a device that triggers the CPC is not limited. For example, the scenario 4 may be the scenario in which the MN triggered CPC is configured before the handover and the CPA is configured after the handover. Alternatively, the scenario 4 may be the scenario in which the SN triggered CPC is configured before the handover and the CPA is configured after the handover.

### Scenario 5: Scenario in which the CPC is configured before the handover and the DC is configured after the handover

(1) For early data forwarding performed between the source MN and the candidate SN before the handover, for example, early data forwarding that is between the source MN and the candidate SN and between an MN terminated bearer in the source MN and an SN terminated bearer in the candidate SN in the CPC (to be specific, before the handover, early data forwarding is performed on a data packet on the MN terminated bearer that is before the CPC, to forward the data packet to the SN terminated bearer in the CPC),
   in a possible solution, the solution 1 in the foregoing scenario 2 may be used. In another possible solution, the solution 2 in the foregoing scenario 2 may be used.
(2) For early data forwarding performed between a source SN and the candidate SN before the handover, for example, early data forwarding that is between the source SN and the candidate SN and between an SN terminated bearer in the source SN and an SN terminated bearer in the candidate SN in the CPC (to be specific, before the handover, early data forwarding is performed on a data packet on the SN terminated bearer in the source SN that is before the CPC, to forward the data packet to the SN terminated bearer in the candidate SN in the CPC),
   in a possible solution, the source SN may continue to forward data to the candidate SN. In this solution, the source MN does not need to send the information about the early data forwarding of the candidate SN to the target MN. After the source SN forwards, to the candidate SN, all data packets corresponding to the bearer that are received from a core network and that are before an end marker, the source SN may send indication information #4 to the candidate SN, to indicate that all the data packets corresponding to the bearer have been forwarded to the candidate SN. For example, the indication information #4 may be a user plane indication, for example, an end marker. Alternatively, the indication information #4 may be a control plane indication, in other words, the indication information #4 is sent to the candidate SN on a control plane. In addition, the source SN may directly send the indication information #4 to the candidate SN, or may send the indication information #4 to the candidate SN through the target MN. After receiving the indication information #4, the candidate SN may send, to the terminal device, a new data packet that is received from the core network and that corresponds to the bearer.

In another possible solution, the source SN stops forwarding data to the candidate SN. In this solution, the source MN may send the information about the early data forwarding of the candidate SN to the target MN. In addition, the source SN may forward, to the target MN, a data packet that corresponds to the bearer and that is received from a core network, and then the target MN forwards the data packet to the SN.

It should be understood that in the scenario 5, a device that triggers the CPC is not limited. For example, the scenario 5 may be the scenario in which the MN triggered CPC is configured before the handover and the DC is configured after the handover. Alternatively, the scenario 5 may be the scenario in which the SN triggered CPC is configured before the handover and the DC is configured after the handover.

According to the foregoing solution, the target MN may learn of related information of the candidate SN configured by the network side before the handover (for example, the identifier of the candidate SN configured by the network side before the handover and the identifier of the terminal device in the candidate SN). The target MN may send the identifier of the terminal device in the candidate SN to the candidate SN. Therefore, the early data forwarding in the CPAC is performed before the handover; and after the handover, the network side may continue to use the data forwarded in the previous early data forwarding. If the CPAC is further configured after the handover, the early data forwarding does not need to be performed on the data. If the DC is configured after the handover, normal data forwarding (namely, conventional data forwarding between the MN terminated bearer and the SN terminated bearer) may not need to be performed on the data.

With reference to steps 1210 to 1260 shown in FIG. 12, the foregoing describes an example of the scenario in which the CPAC is configured before the handover and then the MN handover occurs. It should be understood that the foregoing steps are merely examples for description. This is not strictly limited. In addition, sequence numbers of the foregoing processes do not mean execution sequences. The execution sequences of the processes should be determined according to functions and internal logic of the processes, and should not be construed as any limitation on implementation processes of embodiments of this application.

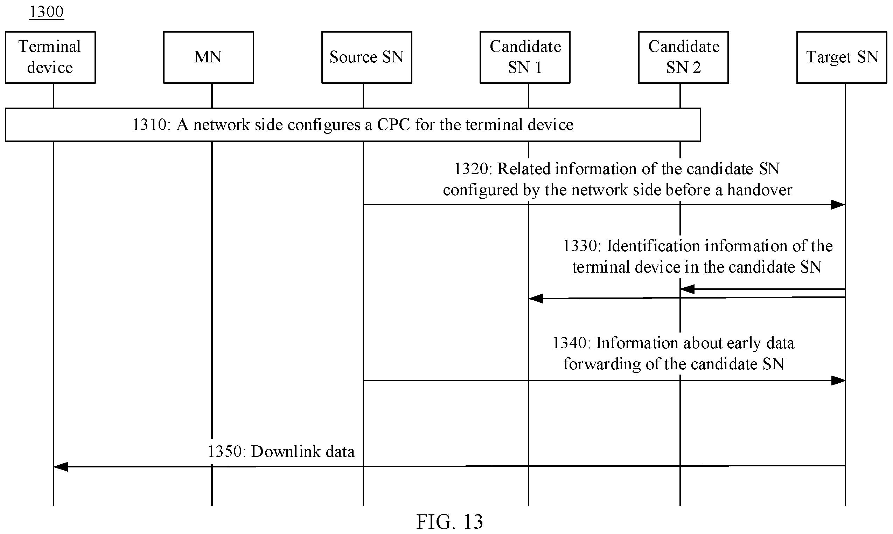

FIG. 13 is a schematic flowchart of a scenario in which a CPC is configured before a handover and then an SN handover occurs and that is applicable to embodiments of this application.

As shown in FIG. 13, the method 1300 is mainly described by using interaction between a terminal device, an MN, a source SN, a candidate SN 1, a candidate SN 2, and a target SN as an example. For differentiation, the source SN represents an SN that is before the handover, and the target SN represents an SN that is after the handover. It should be understood that the source SN and the target SN are names for differentiation, and a specific naming manner of the source SN and the target SN does not constitute a limitation on the protection scope of embodiments of this application. The method 1300 shown in FIG. 13 may include the following steps.

1310: A network side configures the CPC for the terminal device.

Step 1310 is not limited in this embodiment of this application. For example, refer to the descriptions of steps 910 and 920, the descriptions of steps 1010 and 1020, or the descriptions of steps 1110 and 1120. For step 1310, refer to a conventional technology or a manner in the future. Details are not described herein.

1320: The source SN or the MN sends, to the target SN, related information of the candidate SN configured by the network side before the handover.

The related information of the candidate SN may include, for example, one or more of the following: an identifier of the candidate SN configured by the network device before the handover and an identifier of the terminal device in the candidate SN.

It should be understood that any manner in which the target SN can learn of the related information of the candidate SN configured by the network side before the handover falls within the protection scope of embodiments of this application. For example, as shown in FIG. 13, the related information may be sent by the source SN, or the related information may be sent in another manner (for example, forwarded by a source MN). This is not limited.

The following provides descriptions with reference to several scenarios.

### Scenario A: Scenario in which an MN triggered CPC is configured before the handover and an SN triggered CPC is configured after the handover

When the source SN triggers the SN handover, for example, the source SN sends an SN change required message to the MN, the SN change required message may carry an identifier of the target SN.

After receiving the SN change required message sent by the source SN, the MN may send the related information of the candidate SN (for example, the identifier of the candidate SN that is before the handover and the identifier of the terminal device in the candidate SN) to the target SN. For example, after receiving the SN change required message sent by the source SN, the MN may send an SN addition request message to the target SN, where the SN addition request message may carry the related information of the candidate SN.

The MN triggers the SN handover. For example, the MN sends an SN addition request message to the target SN, where the SN addition request message may carry the related information of the candidate SN.

### Scenario B: Scenario in which an SN triggered CPC is configured both before and after the handover

When the source SN triggers the SN handover, for example, the source SN sends an SN change required message to the MN, where the SN change required message may carry information (for example, the related information of the candidate SN) sent by the source SN to the target SN. After receiving the SN change required message sent by the source SN, the MN may send the related information of the candidate SN (for example, the identifier of the candidate SN that is before the handover and the identifier of the terminal device in the candidate SN) to the target SN. For example, after receiving the SN change required message sent by the source SN, the MN may send an SN addition request message to the target SN, where the SN addition request message may carry the related information of the candidate SN.

In other words, in the scenario B, the source SN may first send the related information of the candidate SN (for example, the identifier of the candidate SN that is before the handover and the identifier of the terminal device in the candidate SN) to the MN, and then the MN sends the related information of the candidate SN to the target SN (where for example, the related information is carried in the SN addition request message).

The MN triggers the SN handover. For example, the MN sends an SN addition request message to the target SN, where the SN addition request message may carry the related information of the candidate SN.

### Scenario C: Scenario in which an MN triggered CPC is configured before the handover and DC is configured after the handover

When the source MN triggers the SN handover, for example, the source MN sends the related information of the candidate SN (for example, the identifier of the candidate SN that is before the handover and the identifier of the terminal device in the candidate SN) to the target SN. For example, the MN sends an SN addition request message to the target SN, where the SN addition request message may carry the related information of the candidate SN.

### Scenario D: Scenario in which an SN triggered CPC is configured before the handover and DC is configured after the handover

When the source SN triggers the SN handover, for example, the source SN sends an SN change required message to the MN, the SN change required message may carry the identifier of the target SN and the related information of the candidate SN.

After receiving the SN change required message sent by the source SN, the MN may send an SN addition request message to the target SN, where the SN addition request message may carry the related information of the candidate SN.

When the source MN triggers the SN handover, a solution is similar to the solution in the scenario C. Details are not described herein again.

With reference to the four scenarios, the foregoing describes a case in which the target SN obtains the related information of the candidate SN configured by the network side before the handover. It should be understood that, in different scenarios, adaptive adjustment may be performed based on a case of each scenario. Any solution in which the target SN can finally obtain the related information of the candidate SN configured by the network side before the handover is applicable to embodiments of this application.

1330: The target SN sends identification information of the terminal device in the candidate SN to the candidate SN.

As shown in FIG. 13, the target SN may send the identification information of the terminal device in the candidate SN to the candidate SN 1 and the candidate SN 2.

The following provides descriptions with reference to several scenarios.

### Scenario A: Scenario in which the MN triggered CPC is configured before the handover and the SN triggered CPC is configured after the handover

The target SN receives the related information of the candidate SN sent by the MN. When the target SN determines to trigger the CPC, and the candidate SN is the same as the candidate SN that is before the handover (where for example, it is determined, based on the related information of the candidate SN sent by the MN, that the candidate SN is the same as the candidate SN that is before the handover), the target SN may send information to the candidate SN, where the information may carry the identifier of the terminal device in the candidate SN.

Optionally, the target SN may further send indication information #3 to the MN, where the indication information #3 indicates to use or maintain information related to the terminal device in the candidate SN (where for example, the information may include one or more of the following: a context of the terminal device in the candidate SN and early data forwarding previously performed by the candidate SN). The indication information #3 and the identifier of the terminal device in the candidate SN may be carried in a same message, or may be separately sent. This is not limited.

After receiving the indication information #3, the MN may send the indication information #3 to the candidate SN. For example, the MN sends an SN release request message to the candidate SN, where the SN release request message carries the indication information #3.

### Scenario B: Scenario in which the SN triggered CPC is configured both before and after the handover

The target SN receives the related information of the candidate SN sent by the source SN. When the target SN determines to trigger the CPC, and the candidate SN is the same as the candidate SN that is before the handover (where for example, it is determined, based on the related information of the candidate SN sent by the MN, that the candidate SN is the same as the candidate SN that is before the handover), the target SN may send information to the candidate SN, where the information may carry the identifier of the terminal device in the candidate SN.

Optionally, the target SN may further send indication information #3 to the MN, where the indication information #3 indicates to use or maintain information related to the terminal device in the candidate SN (where for example, the information may include one or more of the following: a context of the terminal device in the candidate SN and early data forwarding previously performed by the candidate SN). The indication information #3 and the identifier of the terminal device in the candidate SN may be carried in a same message, or may be separately sent. This is not limited.

After receiving the indication information #3, the MN may send the indication information #3 to the candidate SN. For example, the MN sends an SN release request message to the candidate SN, where the SN release request message carries the indication information #3.

Optionally, after step 1330, the MN may send configuration information to the terminal device, where the configuration information may be configuration information of the DC, or may be configuration information of the CPC.

1340: The target SN receives information about early data forwarding of the candidate SN.

The MN or the source SN may send the information about the early data forwarding of the candidate SN to the target SN. For example, the MN may directly send the information about the early data forwarding of the candidate SN to the target SN. For another example, the MN may first send the information about the early data forwarding of the candidate SN to the source SN, and then the source SN sends the information about the early data forwarding of the candidate SN to the target SN. FIG. 13 only shows a case in which the source SN sends the information about the early data forwarding of the candidate SN to the target SN. It should be understood that FIG. 13 is merely an example for description, and does not limit the scope of this application.

The information about the early data forwarding of the candidate SN may include, for example, one or more of the following: data packets on which early data forwarding has been performed from the source MN to the candidate SN (for example, indicated by a PDCP SN or an NR-U sequence number) and data packets in the early data forwarding that are discardable by the candidate SN.

The following provides descriptions with reference to several scenarios.

### Scenario A: Scenario in which the MN triggered CPC is configured before the handover and the SN triggered CPC is configured after the handover

In this scenario, the MN may send the information about the early data forwarding of the candidate SN to the target SN.

After receiving the information about the early data forwarding of the candidate SN, the target SN may notify the candidate SN of data packets in the early data forwarding that are discardable, to be specific, the target SN may send indication information #1 to the candidate SN.

In addition, the target SN may determine, based on the data packets on which the MN has performed early data forwarding oriented to the candidate SN, data packets on which early data forwarding oriented to the candidate SN needs to be performed.

In addition, after step 1340, the target SN may further send a plurality of pieces of indication information #1 to the candidate SN based on a status of a downlink data packet sent by the target SN to the terminal device, to indicate which data packets in the early data forwarding are discardable by the candidate SN.

For content of the indication information #1, refer to the foregoing descriptions in the method 900. Details are not described herein again.

### Scenario B: Scenario in which the SN triggered CPC is configured both before and after the handover

In this scenario, the MN or the source SN may send the information about the early data forwarding of the candidate SN to the target SN. After receiving the information about the early data forwarding of the candidate SN, the target SN may notify the candidate SN of data packets in the early data forwarding that are discardable, to be specific, the target SN may send indication information #1 to the candidate SN.

In addition, the target SN may determine, based on the data packets on which the MN has performed early data forwarding oriented to the candidate SN and data packets on which the source SN has performed early data forwarding oriented to the candidate SN, data packets on which early data forwarding oriented to the candidate SN needs to be performed. Therefore, forwarding of a repeated data packet can be avoided as much as possible.

In addition, after step 1340, the target SN may further send a plurality of pieces of indication information #1 to the candidate SN based on a status of a downlink data packet sent by the target SN to the terminal device, to indicate which data packets in the early data forwarding are discardable by the candidate SN.

### Scenario C: Scenario in which the MN triggered CPC is configured before the handover and the DC is configured after the handover

In this scenario, the MN may send the information about the early data forwarding of the candidate SN to the target SN.

### Scenario D: Scenario in which the SN triggered CPC is configured before the handover and the DC is configured after the handover

In this scenario, the MN or the source SN may send the information about the early data forwarding of the candidate SN to the target SN.

With reference to the four scenarios, the foregoing describes a case in which the target SN receives the information about the early data forwarding of the candidate SN. It should be understood that, in different scenarios, adaptive adjustment may be performed based on a case of each scenario. Any solution in which the target SN can learn of the information about the early data forwarding of the candidate SN is applicable to embodiments of this application.

1350: The target SN sends downlink data to the terminal device.

The following provides descriptions with reference to several scenarios.

### Scenario A: Scenario in which the MN triggered CPC is configured before the handover and the SN triggered CPC is configured after the handover

After the terminal device determines that a trigger condition of a candidate PSCell is met and the terminal device accesses the candidate PSCell, the candidate SN may send the downlink data to the terminal device based on information about latest early data forwarding and early forwarded data. For example, the candidate SN may send the downlink data to the terminal device based on latest indication information #1 and the early forwarded data, for example, discard a data packet that the indication information #1 indicates to discard, and send a remaining data packet in early forwarded data packets to the terminal device.

### Scenario B: Scenario in which the SN triggered CPC is configured both before and after the handover

A solution is similar to the solution in the scenario A. Details are not described herein again.

### Scenario C: Scenario in which the MN triggered CPC is configured before the handover and the DC is configured after the handover

After the terminal device determines that a trigger condition of a candidate PSCell is met and the terminal device accesses the candidate PSCell, the SN may send data in the previous early data forwarding to the terminal device.

### Scenario D: Scenario in which the SN triggered CPC is configured before the handover and MR-DC is configured after the handover

A solution is similar to the solution in the scenario C. Details are not described herein again.

According to the foregoing solution, the target SN learns of the related information of the candidate SN configured by the network side before the handover (for example, the identifier of the candidate SN configured by the network side before the handover and the identifier of the terminal device in the candidate SN), and the target SN may send, to the candidate SN, the identifier, of the terminal device, that is in the candidate SN and that is before the handover. In addition, the target SN may receive the information that is about the early data forwarding of the candidate SN and that is before the handover. In this way, after the handover, the network side may continue to use the data forwarded in the previous early data forwarding. In addition, if the CPC is further configured after the handover, early data forwarding does not need to be performed on the data. If the DC is configured after the handover, normal data forwarding (namely, conventional data forwarding between an MN terminated bearer and an SN terminated bearer) may not need to be performed on the data.

With reference to steps 1310 to 1350 shown in FIG. 13, the foregoing describes an example of the scenario in which the CPC is configured before the handover and then the SN handover occurs. It should be understood that the foregoing steps are merely examples for description. This is not strictly limited. In addition, sequence numbers of the foregoing processes do not mean execution sequences. The execution sequences of the processes should be determined according to functions and internal logic of the processes, and should not be construed as any limitation on implementation processes of embodiments of this application.

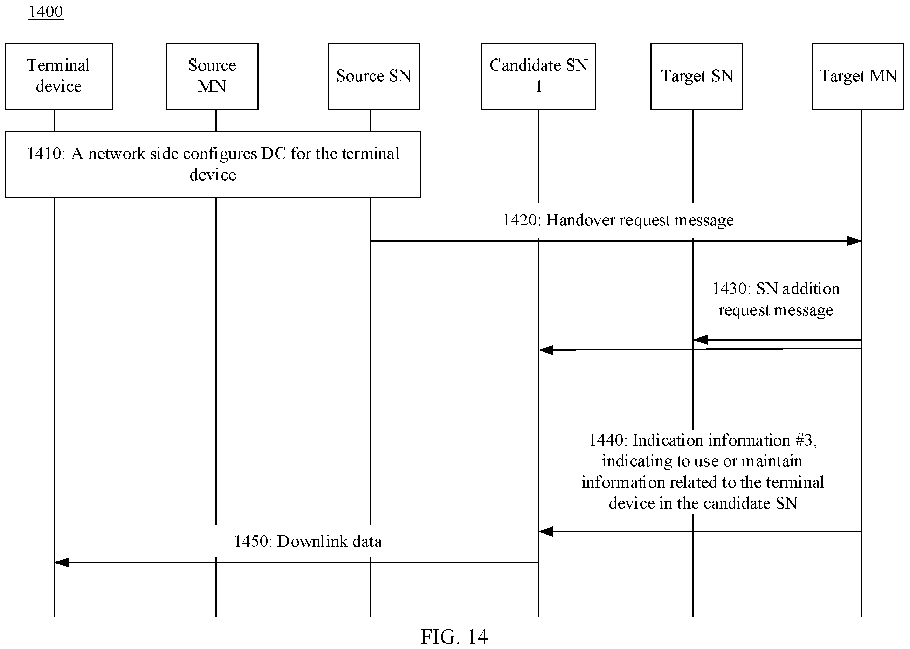

FIG. 14 is a schematic flowchart of a scenario in which a CPAC is not configured before a handover and then an MN handover occurs and that is applicable to embodiments of this application.

As shown in FIG. 14, the method 1400 is mainly described by using interaction between a terminal device, a source MN, a source SN, a candidate SN 1, a target SN, and a target MN as an example. For differentiation, the source SN represents an SN that is before the handover, the target SN represents an SN that is after the handover, the source MN represents an MN that is before the handover, and the target MN represents an MN that is after the handover. It should be understood that the source SN, the target SN, the source MN, and the target MN are all names for differentiation, and a specific naming manner of the source SN, the target SN, the source MN, and the target MN does not constitute a limitation on the protection scope of embodiments of this application. The method 1400 shown in FIG. 14 may include the following steps.

1410: A network side configures DC for the terminal device.

For example, the MN sends an SN addition request message to the SN, and the SN feeds back an SN addition request response to the MN. The MN may notify the terminal device to configure the DC. For example, the MN sends an RRC reconfiguration message to the terminal device, where the RRC reconfiguration message indicates the terminal device to configure the DC.

The foregoing is merely an example for description. Step 1410 is not limited in this embodiment of this application. For example, for step 1410, refer to a conventional technology or a manner in the future.

1420: The source MN sends a handover request message to the target MN.

Optionally, the source MN may further send, to the target MN, an identifier of the SN that is before the handover and an identifier of the terminal device in the SN. For example, the handover request message carries the identifier of the SN that is before the handover and the identifier of the terminal device in the SN.

1430: The target MN sends an SN addition request message to the target SN or the candidate SN.

Optionally, the target MN may further send, to the target SN or the candidate SN, the identifier, of the terminal device, that is in the SN and that is before the handover. For example, the SN addition request message carries the identifier, of the terminal device, that is in the SN and that is before the handover.

It should be understood that the target SN may be or may be not the SN that is before the handover. This is not limited.

The following provides descriptions with reference to three cases.

In a possible case, a CPA is configured after the handover.

In this case, in step 1430, the target MN sends the SN addition request message to the candidate SN.

In this case, the source SN may forward data to the target MN. For example, the source SN directly forwards the data to the target MN. For another example, the source SN may first forward data packets to the source MN, and then the source MN sends the forwarded data packets to the target MN.

The target MN may learn, based on the data packets forwarded by the source SN, which data packets have been previously received by the candidate SN. In this way, data forwarding does not need to be performed on these data packets in early data forwarding between the target MN and the candidate SN. In a possible manner, the target MN learns of, based on a downlink sequence number that needs to be allocated by the target MN and that is carried in sequence number status transfer (SN status transfer) sent by the source MN and the data packet received from the source MN, which data packets have been previously received by the candidate SN.

In another possible case, an MN triggered CPC is configured after the handover.

In this case, in step 1430, the target MN sends the SN addition request message to the candidate SN.

In this case, the source SN may forward data to the target SN. For example, the source SN directly forwards the data to the target SN. For another example, the source SN may first forward data packets to the source MN, then the source MN forwards the data packets to the target MN, and the target MN sends the forwarded data packets to the target SN.

The target SN may learn, based on the data packets forwarded by the source SN, which data packets have been previously received by the candidate SN. For a specific manner, refer to the manner in the first case.

In another possible case, an SN triggered CPC is configured after the handover.

In this case, in step 1430, the target MN sends the SN addition request message to the target SN. Then, the target SN may send, to the candidate SN, the identifier, of the terminal device, that is in the SN and that is before the handover.

In addition, the source SN may forward data to the target SN. In addition, the target SN may learn, based on a data packet forwarded by the source SN, which data packets have been previously received by the candidate SN. For details, refer to the foregoing second case. Details are not described herein again.

The foregoing uses examples for description with reference to the three cases. This is not strictly limited.

Optionally, after step 1430, the target MN may further send configuration information to the terminal device, where the configuration information includes configuration information of the CPAC.

1440: The candidate SN receives indication information #3, to indicate to use or maintain information related to the terminal device in the candidate SN.

The information related to the terminal device in the candidate SN may include, for example, one or more of the following: a context of the terminal device in the candidate SN and early data forwarding previously performed by the candidate SN.

For example, as shown in FIG. 14, in step 1440, the candidate SN 1 receives the indication information #3 indicating to continue to use a data packet received before the handover as a data packet in early data forwarding.

In addition, when the CPA or the MN triggered CPC is configured after the handover, in step 1440, the target MN sends the indication information #3 to the candidate SN. When the SN triggered CPC is configured after the handover, in step 1440, the target SN sends the indication information #3 to the candidate SN; or the target SN first sends the indication information #3 to the MN, and then the MN sends the indication information #3 to the candidate SN.

For the indication information #3, refer to the foregoing descriptions. Details are not described herein again.

1450: The candidate SN sends downlink data to the terminal device.

Optionally, before this step, the candidate SN may receive indication information #1, where the indication information #1 notifies the candidate SN of which data packets in the early data forwarding are discardable. The candidate SN may receive the indication information #1 from the MN, or may receive the indication information #1 from the target SN.

When the terminal device determines that a trigger condition of a candidate PSCell is met, the terminal device accesses the candidate PSCell. For example, the terminal device performs a random access process with the candidate PSCell.

The terminal device accesses the candidate SN, and the candidate SN may send, to the terminal device based on the indication information #1 and information about the early data forwarding, the data packet (including the data packet received before the handover) in the early data forwarding. Alternatively, if the candidate SN knows that the SN that is before the handover and the candidate SN that is after the handover are the same SN, the candidate SN may send, to the terminal device based on latest received indication information #1, the data packet (including the data packet received before the handover) in the early data forwarding.

According to the foregoing solution, in the scenario in which the CPAC is not configured before the handover and then the MN handover occurs, the target MN configures early data forwarding of the CPAC for the terminal device. For an SN terminated bearer in the CPAC configured after the MN handover, the data packet received by the candidate SN before the handover may be used as the data packet in the early data forwarding, to avoid forwarding these data packets again in the early data forwarding, to reduce a transmission delay of these data packets.

With reference to steps 1410 to 1450 shown in FIG. 14, the foregoing describes an example of the scenario in which the CPAC is not configured before the handover and then the MN handover occurs. It should be understood that the foregoing steps are merely examples for description. This is not strictly limited. In addition, sequence numbers of the foregoing processes do not mean execution sequences. The execution sequences of the processes should be determined according to functions and internal logic of the processes, and should not be construed as any limitation on implementation processes of embodiments of this application.

It should be understood that, some message names, such as the early data forwarding (or the early data transmission), the SN addition request message, the indication information #1, and the indication information #2, are involved in some of the foregoing embodiments. It should be understood that the names do not limit the protection scope of embodiments of this application.

It should be further understood that in some of the foregoing embodiments, a base station (for example, the MN or the SN) is mainly used as an example for description. It should be understood that a network device in another form is usable in embodiments of this application.

It should be further understood that in some of the foregoing embodiments, the SN addition request message is mentioned for a plurality of times, and may also be denoted as a request message for an SN addition, and a name of the SN addition request message does not limit the protection scope of embodiments of this application.

It should be further understood that, in some of the foregoing embodiments, in the PSCell addition case, the SN addition request message is sent, where the SN addition request message is for the conditional SN addition; and in the PSCell change case, the SN addition request message is sent, where the SN addition request message is for the conditional SN change. The foregoing is merely an example for description. Content specifically indicated by the SN addition request message is not strictly limited. For example, regardless of the PSCell addition or the PSCell change, the SN addition request message is sent, where the SN addition request message is for the conditional SN addition. In other words, the SN addition request message may be defined as being for the conditional SN addition, and the SN change and the SN addition are not specifically distinguished.

It should be further understood that, in some of the foregoing embodiments, data packet forwarding is mentioned for a plurality of times, and mainly indicates forwarding a data packet that is not transmitted and/or a data packet that fails to be transmitted. Herein, the data packet may be an uplink data packet, or may be a downlink data packet. This is not limited. For example, the source network device may forward, to the target network device, the downlink data packet to be sent to the terminal device. For another example, the source network device may forward, to the target network device, the uplink data packet that is received out of order from the terminal device side.

It should be further understood that, in FIG. 12 to FIG. 14, the early data forwarding between the MN and the SN includes the early data forwarding of the SN terminated SCG/MCG/split bearer in the candidate SN in the CPAC, and may further include the early data forwarding that is of the MN terminated SCG/split bearer in the MN and that is between the MN and the SN. Unless otherwise specified, a form of the data packet in the early data forwarding is not limited in this application.

Embodiments described in this specification may be independent solutions, or may be combined based on internal logic. These solutions all fall within the protection scope of this application.

It may be understood that, in the foregoing method embodiments, the methods and operations implemented by the terminal device may alternatively be implemented by a component (for example, a chip or a circuit) that may be used in the terminal device, and the methods and operations implemented by the network device (for example, the MN or the SN) may alternatively be implemented by a component (for example, a chip or a circuit) that may be used in the network device.

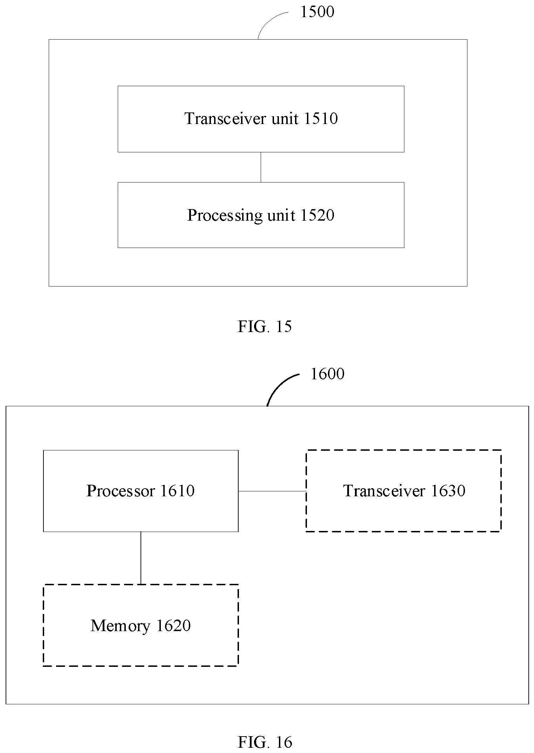

The methods provided in embodiments of this application are described above in detail with reference to FIG. 7 to FIG. 14. With reference to FIG. 15 to FIG. 17, the following describes in detail a data transmission apparatus provided in embodiments of this application. It should be understood that descriptions of apparatus embodiments correspond to the descriptions of the method embodiments. Therefore, for content that is not described in detail, refer to the foregoing method embodiments. For brevity, details are not described herein again.

FIG. 15 is a schematic block diagram of a data transmission apparatus according to an embodiment of this application. The apparatus 1500 includes a transceiver unit 1510 and a processing unit 1520. The transceiver unit 1510 may implement a corresponding communication function, and the processing unit 1520 is configured to process data. The transceiver unit 1510 may also be referred to as a communication interface or a communication unit.

Optionally, the apparatus 1500 may further include a storage unit. The storage unit may be configured to store instructions and/or data. The processing unit 1520 may read the instructions and/or the data in the storage unit, so that the apparatus implements the foregoing method embodiments.

The apparatus 1500 may be configured to perform an action performed by the network device in the foregoing method embodiments. In this case, the apparatus 1500 may be the network device or a component that may be configured on the network device. The transceiver unit 1510 is configured to perform a transceiver-related operation on the network device side in the foregoing method embodiments. The processing unit 1520 is configured to perform a processing-related operation on the network device side in the foregoing method embodiments.

In a design, the apparatus 1500 is configured to perform an action performed by the master network device (for example, the MN) in the foregoing method embodiments.

In a possible implementation, the processing unit 1520 is configured to configure a conditional candidate PSCell addition or change for a terminal device. The transceiver unit 1510 is configured to perform early data transmission oriented to a network device to which a candidate PSCell belongs, where the early data transmission is sending, before the terminal device accesses the candidate PSCell, one or more data packets to the network device to which the candidate PSCell belongs, and a form of the data packet is a packet data convergence protocol protocol data unit, where the one or more data packets include a data packet on an MN terminated secondary cell group bearer configured for the terminal device and/or a data packet on an MN terminated split bearer configured for the terminal device.

In an example, the transceiver unit 1510 is further configured to send first indication information to the network device to which the candidate PSCell belongs, where the first indication information indicates to perform early data transmission on the MN terminated secondary cell group bearer and/or the MN terminated split bearer.

In another example, the transceiver unit 1510 is further configured to send second indication information to the network device to which the candidate PSCell belongs, where the second indication information indicates to discard or ignore a part or all of the one or more data packets.

In another example, the second indication information includes information about one or more sequence numbers, and the information about the one or more sequence numbers indicates to discard or ignore the part or all of the one or more data packets.

In another example, the sequence number is a packet data convergence protocol sequence number or a new radio user plane sequence number.

In another example, the transceiver unit 1510 is specifically configured to: when a preset condition is met, send the second indication information to the network device to which the candidate PSCell belongs.

The apparatus 1500 may implement a corresponding step or procedure performed by the master network device (for example, the MN) in the method embodiments according to embodiments of this application. The apparatus 1500 may include units configured to perform the methods performed by the master network device (for example, the MN) in FIG. 7 and FIG. 9 to FIG. 11. In addition, the units in the apparatus 1500 and the foregoing other operations and/or functions are respectively intended to implement the corresponding procedures in the method embodiments of the master network device (for example, the MN) in FIG. 7 and FIG. 9 to FIG. 11.

When the apparatus 1500 is configured to perform the method 700 in FIG. 7, the transceiver unit 1510 may be configured to perform step 720 in the method 700, and the processing unit 1520 may be configured to perform a processing step, for example, step 710, in the method 700.

When the apparatus 1500 is configured to perform the method 900 in FIG. 9, the transceiver unit 1510 may be configured to perform steps 920 and 940 in the method 900, and the processing unit 1520 may be configured to perform a processing step, for example, step 910, in the method 900.

When the apparatus 1500 is configured to perform the method 1000 in FIG. 10, the transceiver unit 1510 may be configured to perform steps 1020 and 1040 in the method 1000, and the processing unit 1520 may be configured to perform a processing step, for example, step 1010, in the method 1000.

When the apparatus 1500 is configured to perform the method 1100 in FIG. 11, the transceiver unit 1510 may be configured to perform steps 1120 and 1140 in the method 1100, and the processing unit 1520 may be configured to perform a processing step, for example, step 1110, in the method 1100.

It should be understood that a specific process in which each unit performs the foregoing corresponding step is described in detail in the foregoing method embodiments. For brevity, details are not described herein again.

In another design, the apparatus 1500 is configured to perform an action performed by the candidate network device (for example, the candidate SN) in the foregoing method embodiments.

In a possible implementation, the transceiver unit 1510 is configured to receive one or more data packets from an MN, where a form of the data packet is a packet data convergence protocol protocol data unit, and the one or more data packets include a data packet on an MN terminated secondary cell group bearer configured for a terminal device and/or a data packet on an MN terminated split bearer configured for the terminal device. The processing unit 1520 is configured to access the terminal device. The transceiver unit 1510 is further configured to send a part or all of the one or more data packets to the terminal device, where a conditional candidate primary secondary cell group cell PSCell addition or change is configured for the terminal device.

In an example, the transceiver unit 1510 is further configured to receive second indication information, where the second indication information indicates to discard or ignore a part or all of the one or more data packets. The transceiver unit 1510 is specifically configured to send data to the terminal device based on the one or more data packets and the second indication information.

In another example, the second indication information includes information about one or more sequence numbers, and the information about the one or more sequence numbers indicates to discard or ignore the part or all of the one or more data packets.

In another example, the sequence number is a packet data convergence protocol sequence number or a new radio user plane sequence number.

In another example, the transceiver unit 1510 is specifically configured to periodically receive the second indication information.

The apparatus 1500 may implement a corresponding step or procedure performed by the candidate network device (for example, the candidate SN) in the method embodiments according to embodiments of this application. The apparatus 1500 may include units configured to perform the methods performed by the candidate network device (for example, the candidate SN) in FIG. 7 and FIG. 9 to FIG. 11. In addition, the units in the apparatus 1500 and the foregoing other operations and/or functions are respectively intended to implement the corresponding procedures in the method embodiments of the candidate network device (for example, the candidate SN) in the SNs in FIG. 7 and FIG. 9 to FIG. 11.

When the apparatus 1500 is configured to perform the method 700 in FIG. 7, the transceiver unit 1510 may be configured to perform steps 720 and 730 in the method 700, and the processing unit 1520 may be configured to perform a processing step, for example, step 710, in the method 700.

When the apparatus 1500 is configured to perform the method 900 in FIG. 9, the transceiver unit 1510 may be configured to perform steps 940, 950, and 960 in the method 900, and the processing unit 1520 may be configured to perform a processing step, for example, step 910, in the method 900.

When the apparatus 1500 is configured to perform the method 1000 in FIG. 10, the transceiver unit 1510 may be configured to perform steps 1040, 1050, and 1060 in the method 1000, and the processing unit 1520 may be configured to perform a processing step, for example, step 1010, in the method 1000.

When the apparatus 1500 is configured to perform the method 1100 in FIG. 11, the transceiver unit 1510 may be configured to perform steps 1140, 1150, and 1160 in the method 1100, and the processing unit 1520 may be configured to perform a processing step, for example, step 1110, in the method 1100.

It should be understood that a specific process in which each unit performs the foregoing corresponding step is described in detail in the foregoing method embodiments. For brevity, details are not described herein.

In another design, the apparatus 1500 is configured to perform an action performed by the source network device (for example, the source MN or the source SN) in the foregoing method embodiments.

In a possible implementation, the processing unit 1520 is configured to determine that a network device configured for a terminal device after a handover includes a second network device, where when the second network device is, before the terminal device is handed over from the apparatus 1500 to a target network device, a candidate network device that is configured for the terminal device and that is in a conditional candidate primary secondary cell group cell PSCell addition or change scenario, after the terminal device is handed over from the apparatus 1500 to the target network device, the second network device is the candidate network device that is configured for the terminal device and that is in the conditional candidate PSCell addition or change scenario, or the second network device is a network device that provides a service for the terminal device; or when the second network device is, after the terminal device is handed over from the apparatus 1500 to a target network device, a candidate network device that is configured for the terminal device and that is in a conditional candidate primary secondary cell group cell PSCell addition or change scenario, before the terminal device is handed over from the apparatus 1500 to the target network device, the second network device is the candidate network device that is configured for the terminal device and that is in the conditional candidate PSCell addition or change scenario, or the second network device is a network device that provides a service for the terminal device. The transceiver unit 1510 is configured to send third indication information to the second network device, where the third indication information indicates to use information related to the terminal device in the second network device.

In an example, the information related to the terminal device includes one or more of the following: context information of the terminal device, a data packet of the terminal device that has been transmitted to the second network device, and information about a data packet that is of the terminal device and that is discardable by the second network device.

In another example, the transceiver unit 1510 is further configured to receive identification information of the second network device sent by the target network device. The processing unit 1520 is specifically configured to determine, based on the identification information of the second network device, that the network device configured for the terminal device after the handover includes the second network device.

In another example, the transceiver unit 1510 is further configured to send early data transmission information of the second network device to the target network device.

In another example, the transceiver unit 1510 is further configured to send information about one or more network devices to the target network device, where the one or more network devices include the second network device, and the one or more network devices are a candidate network device that is configured for the terminal device before the terminal device is handed over from the source network device to the target network device and that is in the conditional candidate PSCell addition or change scenario, or are a network device that provides a service for the terminal device; and the information about the one or more network devices includes one or more of the following: identification information of the one or more network devices and identification information of the terminal device in the one or more network devices.

In another example, the transceiver unit 1510 is specifically configured to send a handover request message to the target network device, where the handover request message includes the information about the one or more network devices.

In another example, the transceiver unit 1510 is further configured to send, to the target network device or the second network device, a data packet to be sent to the terminal device.

In another example, the target network device is a network device in the conditional candidate PSCell addition or change scenario, and the apparatus 1500 is a network device in the conditional candidate PSCell addition or change scenario. Alternatively, the target network device is a network device in the conditional candidate PSCell addition or change scenario, and the apparatus 1500 is a network device in a carrier aggregation scenario. Alternatively, the target network device is a network device in a carrier aggregation scenario, and the apparatus 1500 is a network device in the conditional candidate PSCell addition or change scenario.

The apparatus 1500 may implement a corresponding step or procedure performed by the source network device (for example, the source MN or the source SN) in the method embodiments according to embodiments of this application. The apparatus 1500 may include units configured to perform the methods performed by the source network device (for example, the source MN or the source SN) in FIG. 8 and FIG. 12 to FIG. 14. In addition, the units in the apparatus 1500 and the foregoing other operations and/or functions are respectively intended to implement the corresponding procedures in the method embodiments in FIG. 8 and FIG. 12 to FIG. 14.

When the apparatus 1500 is configured to perform the method 800 in FIG. 8, the transceiver unit 1510 may be configured to perform steps 8202 and 840 in the method 800, and the processing unit 1520 may be configured to perform a processing step, for example, step 830, in the method 800.

When the apparatus 1500 is configured to perform the method 1200 in FIG. 12, the transceiver unit 1510 may be configured to perform steps 1220, 1240, 1250, and 1260 in the method 1200, and the processing unit 1520 may be configured to perform a processing step, for example, step 1210, in the method 1200.

When the apparatus 1500 is configured to perform the method 1300 in FIG. 13, the transceiver unit 1510 may be configured to perform steps 1320 and 1340 in the method 1300, and the processing unit 1520 may be configured to perform a processing step, for example, step 1310, in the method 1300.

When the apparatus 1500 is configured to perform the method 1400 in FIG. 14, the transceiver unit 1510 may be configured to perform step 1420 in the method 1400, and the processing unit 1520 may be configured to perform a processing step, for example, step 1410, in the method 1400.

It should be understood that a specific process in which each unit performs the foregoing corresponding step is described in detail in the foregoing method embodiments. For brevity, details are not described herein.

In another design, the apparatus 1500 is configured to perform an action performed by the target network device (for example, the target MN or the target SN) in the foregoing method embodiments.

In a possible implementation, the processing unit 1520 is configured to determine to configure N first network devices for a terminal device, where the N first network devices include a second network device, and N is an integer greater than or equal to 1, where when the second network device is, before the terminal device is handed over from a source network device to the apparatus 1500, a candidate network device that is configured for the terminal device and that is in a conditional candidate primary secondary cell group cell PSCell addition or change scenario, after the terminal device is handed over from the source network device to the apparatus 1500, the second network device is the candidate network device that is configured for the terminal device and that is in the conditional candidate PSCell addition or change scenario, or the second network device is a network device that provides a service for the terminal device; or when the second network device is, after the terminal device is handed over from a source network device to the apparatus 1500, a candidate network device that is configured for the terminal device and that is in a conditional candidate primary secondary cell group cell PSCell addition or change scenario, before the terminal device is handed over from the source network device to the apparatus 1500, the second network device is the candidate network device that is configured for the terminal device and that is in the conditional candidate PSCell addition or change scenario, or the second network device is a network device that provides a service for the terminal device. The transceiver unit 1510 is configured to send third indication information, where the third indication information indicates to use information related to the terminal device in the second network device.

In an example, the information related to the terminal device includes one or more of the following: context information of the terminal device, a data packet of the terminal device that has been transmitted to the second network device, and information about a data packet that is of the terminal device and that is discardable by the second network device.

In another example, the transceiver unit 1510 is specifically configured to: send third indication information to the second network device, or send third indication information to the source network device.

In another example, the transceiver unit 1510 is further configured to receive early data transmission information of the second network device sent by the source network device.

In another example, the transceiver unit 1510 is further configured to perform early data transmission with the second network device based on the early data transmission information of the second network device.

In another example, the transceiver unit 1510 is further configured to send identification information of the second network device to the source network device.

In another example, the transceiver unit 1510 is further configured to receive information about one or more network devices from the source network device, where the one or more network devices include the second network device, and the one or more network devices are a candidate network device that is configured for the terminal device before the terminal device is handed over from the source network device to the target network device and that is in the conditional candidate PSCell addition or change scenario, or are a network device that provides a service for the terminal device; and the information about the one or more network devices includes one or more of the following: identification information of the one or more network devices and identification information of the terminal device in the one or more network devices.

In another example, the information about the one or more network devices includes the identification information of the one or more network devices. The processing unit 1520 is further configured to determine, based on the identification information of the one or more network devices, that the N first network devices include the second network device.

In another example, the transceiver unit 1510 is specifically configured to receive a handover request message, where the handover request message includes the information about the one or more network devices.

In another example, the apparatus 1500 is a network device in the conditional candidate PSCell addition or change scenario, and the source network device is a network device in the conditional candidate PSCell addition or change scenario. Alternatively, the apparatus 1500 is a network device in the conditional candidate PSCell addition or change scenario, and the source network device is a network device in a carrier aggregation scenario. Alternatively, the apparatus 1500 is a network device in a carrier aggregation scenario, and the source network device is a network device in the conditional candidate PSCell addition or change scenario.

The apparatus 1500 may implement a corresponding step or procedure performed by the target network device (for example, the target MN or the target SN) in the method embodiments according to embodiments of this application. The apparatus 1500 may include units configured to perform the methods performed by the target network device (for example, the target MN or the target SN) in FIG. 8 and FIG. 12 to FIG. 14. In addition, the units in the apparatus 1500 and the foregoing other operations and/or functions are respectively intended to implement the corresponding procedures in the method embodiments in FIG. 8 and FIG. 12 to FIG. 14.

When the apparatus 1500 is configured to perform the method 800 in FIG. 8, the transceiver unit 1510 may be configured to perform steps 8201, 8201, and 840 in the method 800, and the processing unit 1520 may be configured to perform a processing step, for example, step 810, in the method 800.

When the apparatus 1500 is configured to perform the method 1200 in FIG. 12, the transceiver unit 1510 may be configured to perform steps 1220, 1230, 1240, and 1260 in the method 1200, and the processing unit 1520 may be configured to perform a processing step in the method 1200.

When the apparatus 1500 is configured to perform the method 1300 in FIG. 13, the transceiver unit 1510 may be configured to perform steps 1320, 1330, and 1340 in the method 1300, and the processing unit 1520 may be configured to perform a processing step in the method 1300.

When the apparatus 1500 is configured to perform the method 1400 in FIG. 14, the transceiver unit 1510 may be configured to perform steps 1420, 1430, and 1440 in the method 1400, and the processing unit 1520 may be configured to perform a processing step in the method 1400.

It should be understood that a specific process in which each unit performs the foregoing corresponding step is described in detail in the foregoing method embodiments. For brevity, details are not described herein.

The processing unit 1520 in the foregoing embodiment may be implemented by at least one processor or a processor-related circuit. The transceiver unit 1510 may be implemented by a transceiver or a transceiver-related circuit. The storage unit may be implemented by at least one memory.

As shown in FIG. 16, an embodiment of this application further provides a data transmission apparatus 1600. The apparatus 1600 includes a processor 1610. The processor 1610 is coupled to a memory 1620. The memory 1620 is configured to store a computer program or instructions and/or data. The processor 1610 is configured to execute the computer program or the instructions and/or the data stored in the memory 1620, so that the methods in the foregoing method embodiments are performed.

Optionally, the apparatus 1600 includes one or more processors 1610.

Optionally, as shown in FIG. 16, the apparatus 1600 may further include the memory 1620.

Optionally, the apparatus 1600 may include one or more memories 1620.

Optionally, the memory 1620 and the processor 1610 may be integrated or separately disposed.

Optionally, as shown in FIG. 16, the apparatus 1600 may further include a transceiver 1630. The transceiver 1630 is configured to receive and/or send a signal. For example, the processor 1610 is configured to control the transceiver 1630 to receive and/or send the signal.

In a solution, the apparatus 1600 is configured to implement an operation performed by the network device in the foregoing method embodiments.

For example, the processor 1610 is configured to implement a processing-related operation performed by the master network device (for example, the MN) in the foregoing method embodiments, and the transceiver 1630 is configured to implement a transceiver-related operation performed by the master network device in the foregoing method embodiments.

For another example, the processor 1610 is configured to implement a processing-related operation performed by the candidate network device (for example, the candidate SN) in the foregoing method embodiments, and the transceiver 1630 is configured to implement a transceiver-related operation performed by the candidate network device in the foregoing method embodiments.

For another example, the processor 1610 is configured to implement a processing-related operation performed by the source network device (for example, the source MN or the source SN) in the foregoing method embodiments, and the transceiver 1630 is configured to implement a transceiver-related operation performed by the source network device in the foregoing method embodiments.

For another example, the processor 1610 is configured to implement a processing-related operation performed by the target network device (for example, the target MN or the target SN) in the foregoing method embodiments, and the transceiver 1630 is configured to implement a transceiver-related operation performed by the target network device in the foregoing method embodiments.

An embodiment of this application further provides a communication apparatus 1700, and the communication apparatus 1700 may be a network device, or may be a chip. The communication apparatus 1700 may be configured to perform an operation performed by the network device in the foregoing method embodiments.

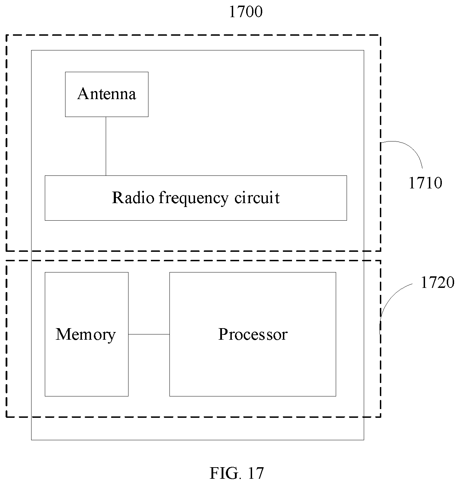

When the communication apparatus 1700 is the network device, for example, a base station, FIG. 17 is a simplified schematic diagram of a structure of the base station. The base station includes a part 1710 and a part 1720. The part 1710 is mainly configured to: receive and send a radio frequency signal, and perform conversion between the radio frequency signal and a baseband signal. The part 1720 is mainly configured to: perform baseband processing, control the base station, and so on. The part 1710 may be usually referred to as a transceiver unit, a transceiver, a transceiver circuit, or the like. The part 1720 is usually a control center of the base station, may be usually referred to as a processing unit, and is configured to control the base station to perform a processing operation on a receive end device side in the foregoing method embodiments.

The transceiver unit of the part 1710 may also be referred to as a transceiver or the like, and includes an antenna and a radio frequency circuit. The radio frequency circuit is mainly configured to perform radio frequency processing. Optionally, a component that is in the part 1710 and that is configured to implement a receiving function may be considered as a receiving unit, and a component that is configured to implement a sending function may be considered as a sending unit. In other words, the part 1710 includes the receiving unit and the sending unit. The receiving unit may also be referred to as a receiver, a receiver circuit, or the like. The sending unit may be referred to as a transmitter, a transmitter circuit, or the like.

The part 1720 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, the plurality of boards may share one or more processors, may share one or more memories, or may simultaneously share one or more processors.

It should be understood that FIG. 17 is merely an example instead of a limitation. The foregoing network device including the transceiver unit and the processing unit may not depend on the structure shown in FIG. 17.

When the apparatus 1700 is the chip, the chip includes a transceiver unit and a processing unit. The transceiver unit may be an input/output circuit or a communication interface. The processing unit is a processor, a microprocessor, or an integrated circuit integrated on the chip. Certainly, the apparatus 1700 may alternatively be a chip system or a processing system, so that a device on which the apparatus 1700 is installed can implement the methods and the functions in embodiments of this application. For example, the processing unit 1720 may be a processing circuit in the chip system or the processing system to control the device on which the chip system or the processing system is installed, and may be coupled to a storage unit to invoke instructions in the storage unit, so that the device can implement the methods and the functions in embodiments of this application. The transceiver unit 1710 may be an input/output circuit in the chip system or the processing system, to output information processed by the chip system, or input to-be-processed data or signaling information to the chip system for processing.

An embodiment of this application further provides a computer-readable storage medium, where the computer-readable storage medium stores computer instructions for implementing the method performed by the network device in the foregoing method embodiments.

For example, when the computer instructions are executed by a computer, the computer is enabled to implement the methods performed by the network device in the foregoing method embodiments.

An embodiment of this application further provides a computer program product including instructions. When the instructions are executed by a computer, the computer is enabled to implement the methods performed by the network device in the foregoing method embodiments.

An embodiment of this application further provides a communication system. The communication system includes the network devices in the foregoing embodiments, for example, the master network device and the candidate network device; the source network device and the target network device; or the source network device, the target network device, and the candidate network device.

For explanations and beneficial effects of related content of any one of the apparatuses provided above, refer to the corresponding method embodiment provided above. Details are not described herein again.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should be further noted that the memory described in this specification aims to include but is not limited to these memories and any memory of another appropriate type.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, to be specific, may be located in one position, or may be distributed on a plurality of network units. Some or all of the units may be selected based on actual requirements to implement the solutions provided in this application.

In addition, function units in embodiments of this application may be integrated into one unit, each of the units may exist alone physically, or two or more units may be integrated into one unit.

All or some of the foregoing embodiments may be implemented by software, hardware, firmware, or any combination thereof. When software is used to implement embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
configuring a conditional candidate primary secondary cell group cell PSCell addition or change for a terminal device; and
performing early data transmission oriented to a network device to which a candidate PSCell belongs, wherein the early data transmission is sending, before the terminal device accesses the candidate PSCell, one or more data packets to the network device to which the candidate PSCell belongs, and a form of the one or more data packets is a packet data convergence protocol protocol data unit, wherein
the one or more data packets comprise a data packet on a master base station MN terminated secondary cell group bearer configured for the terminal device and/or a data packet on an MN terminated split bearer configured for the terminal device.

2. The method according to claim 1, wherein the method further comprises:
sending first indication information to the network device to which the candidate PSCell belongs, wherein the first indication information indicates to perform early data transmission on the MN terminated secondary cell group bearer and/or the MN terminated split bearer.

3. The method according to claim 1 or 2, wherein the method further comprises:
sending second indication information to the network device to which the candidate PSCell belongs, wherein the second indication information indicates to discard or ignore a part or all of the one or more data packets.

4. The method according to claim 3, wherein
the second indication information comprises information about one or more sequence numbers, and the information about the one or more sequence numbers indicates to discard or ignore the part or all of the one or more data packets.

5. The method according to claim 4, wherein
the sequence number is a packet data convergence protocol sequence number or a new radio user plane sequence number.

6. The method according to any one of claims 3 to 5, wherein the sending second indication information to the network device to which the candidate PSCell belongs comprises:
when a preset condition is met, sending the second indication information to the network device to which the candidate PSCell belongs.

7. A data transmission method, comprising:
before access of a terminal device, receiving one or more data packets from a master base station MN, wherein a form of the one or more data packets is a packet data convergence protocol protocol data unit, and the one or more data packets comprise a data packet on an MN terminated secondary cell group bearer configured for the terminal device and/or a data packet on an MN terminated split bearer configured for the terminal device; and
after the access of the terminal device, sending a part or all of the one or more data packets to the terminal device, wherein
a conditional candidate primary secondary cell group cell PSCell addition or change is configured for the terminal device.

8. The method according to claim 7, wherein the method further comprises:
receiving second indication information, wherein the second indication information indicates to discard or ignore a part or all of the one or more data packets; and
sending the one or more data packets to the terminal device comprises:
sending data to the terminal device based on the one or more data packets and the second indication information.

9. The method according to claim 8, wherein
the second indication information comprises information about one or more sequence numbers, and the information about the one or more sequence numbers indicates to discard or ignore the part or all of the one or more data packets.

10. The method according to claim 9, wherein
the sequence number is a packet data convergence protocol sequence number or a new radio user plane sequence number.

11. The method according to any one of claims 8 to 10, wherein the receiving second indication information comprises: periodically receiving the second indication information.

12. A data transmission method, comprising:
determining, by a target network device, to configure N first network devices for a terminal device, wherein the N first network devices comprise a second network device, and N is an integer greater than or equal to 1, wherein
when the second network device is, before the terminal device is handed over from a source network device to the target network device, a candidate network device that is configured for the terminal device and that is in a conditional candidate primary secondary cell group cell PSCell addition or change scenario, after the terminal device is handed over from the source network device to the target network device, the second network device is the candidate network device that is configured for the terminal device and that is in the conditional candidate PSCell addition or change scenario, or the second network device is a network device that provides a service for the terminal device; or
when the second network device is, after the terminal device is handed over from a source network device to the target network device, a candidate network device that is configured for the terminal device and that is in a conditional candidate primary secondary cell group cell PSCell addition or change scenario, before the terminal device is handed over from the source network device to the target network device, the second network device is the candidate network device that is configured for the terminal device and that is in the conditional candidate PSCell addition or change scenario, or the second network device is a network device that provides a service for the terminal device; and
sending, by the target network device, third indication information, wherein the third indication information indicates to use information related to the terminal device in the second network device.

13. The method according to claim 12, wherein the information related to the terminal device comprises one or more of the following: context information of the terminal device, a data packet of the terminal device that has been transmitted to the second network device, and information about a data packet that is of the terminal device and that is discardable by the second network device.

14. The method according to claim 12 or 13, wherein the sending, by the target network device, third indication information comprises:
sending, by the target network device, the third indication information to the second network device; or
sending, by the target network device, the third indication information to the source network device.

15. The method according to any one of claims 12 to 14, wherein the method further comprises:
receiving, by the target network device, early data transmission information of the second network device from the source network device.

16. The method according to claim 15, wherein the method further comprises:
performing, by the target network device, early data transmission with the second network device based on the early data transmission information of the second network device.

17. The method according to any one of claims 12 to 16, wherein the method further comprises:
sending, by the target network device, identification information of the second network device to the source network device.

18. The method according to any one of claims 12 to 17, wherein the method further comprises:
receiving, by the target network device, information about one or more network devices from the source network device, wherein the one or more network devices comprise the second network device, and the one or more network devices are a candidate network device that is configured for the terminal device before the terminal device is handed over from the source network device to the target network device and that is in the conditional candidate PSCell addition or change scenario, or are a network device that provides a service for the terminal device; and
the information about the one or more network devices comprises one or more of the following:
identification information of the one or more network devices and identification information of the terminal device in the one or more network devices.

19. The method according to claim 18, wherein the information about the one or more network devices comprises the identification information of the one or more network devices; and
the method further comprises: determining, based on the identification information of the one or more network devices, that the N first network devices comprise the second network device.

20. The method according to claim 18 or 19, wherein the receiving, by the target network device, information about one or more network devices from the source network device comprises:
receiving, by the target network device, a handover request message from the source network device, wherein the handover request message comprises the information about the one or more network devices.

21. The method according to any one of claims 12 to 20, wherein
the target network device is a network device in the conditional candidate PSCell addition or change scenario, and the source network device is a network device in the conditional candidate PSCell addition or change scenario;
the target network device is a network device in the conditional candidate PSCell addition or change scenario, and the source network device is a network device in a carrier aggregation scenario; or
the target network device is a network device in a carrier aggregation scenario, and the source network device is a network device in the conditional candidate PSCell addition or change scenario.

22. A data transmission method, comprising:
determining, by a source network device, that a network device configured for a terminal device after a handover comprises a second network device, wherein
when the second network device is, before the terminal device is handed over from the source network device to a target network device, a candidate network device that is configured for the terminal device and that is in a conditional candidate primary secondary cell group cell PSCell addition or change scenario, after the terminal device is handed over from the source network device to the target network device, the second network device is the candidate network device that is configured for the terminal device and that is in the conditional candidate PSCell addition or change scenario, or the second network device is a network device that provides a service for the terminal device; or
when the second network device is, after the terminal device is handed over from the source network device to a target network device, a candidate network device that is configured for the terminal device and that is in a conditional candidate primary secondary cell group cell PSCell addition or change scenario, before the terminal device is handed over from the source network device to the target network device, the second network device is the candidate network device that is configured for the terminal device and that is in the conditional candidate PSCell addition or change scenario, or the second network device is a network device that provides a service for the terminal device; and
sending, by the source network device, third indication information to the second network device, wherein the third indication information indicates to use information related to the terminal device in the second network device.

23. The method according to claim 22, wherein the information related to the terminal device comprises one or more of the following: context information of the terminal device, a data packet of the terminal device that has been transmitted to the second network device, and information about a data packet that is of the terminal device and that is discardable by the second network device.

24. The method according to claim 22 or 23, wherein the determining, by a source network device, that a network device configured for a terminal device after a handover comprises a second network device comprises:
receiving, by the source network device, identification information of the second network device from the target network device; and
determining, by the source network device based on the identification information of the second network device, that the network device configured for the terminal device after the handover comprises the second network device.

25. The method according to any one of claims 22 to 24, wherein the method further comprises:
sending, by the source network device, early data transmission information of the second network device to the target network device.

26. The method according to any one of claims 22 to 25, wherein the method further comprises:
sending, by the source network device, information about one or more network devices to the target network device, wherein the one or more network devices comprise the second network device, and the one or more network devices are a candidate network device that is configured for the terminal device before the terminal device is handed over from the source network device to the target network device and that is in the conditional candidate PSCell addition or change scenario, or are a network device that provides a service for the terminal device; and
the information about the one or more network devices comprises one or more of the following:
identification information of the one or more network devices and identification information of the terminal device in the one or more network devices.

27. The method according to claim 26, wherein the sending, by the source network device, information about one or more network devices to the target network device comprises:
sending, by the source network device, a handover request message to the target network device, wherein the handover request message comprises the information about the one or more network devices.

28. The method according to any one of claims 22 to 27, wherein the method further comprises:
sending, by the source network device to the target network device or the second network device, a data packet to be sent to the terminal device.

29. The method according to any one of claims 22 to 28, wherein
the target network device is a network device in the conditional candidate PSCell addition or change scenario, and the source network device is a network device in the conditional candidate PSCell addition or change scenario;
the target network device is a network device in the conditional candidate PSCell addition or change scenario, and the source network device is a network device in a carrier aggregation scenario; or
the target network device is a network device in a carrier aggregation scenario, and the source network device is a network device in the conditional candidate PSCell addition or change scenario.

30. A computer-readable storage medium, wherein the computer-readable storage medium stores a computer program; and when the computer program is executed by one or more processors, an apparatus comprising the processor is enabled to perform the method according to any one of claims 1 to 29.

31. A computer program product, wherein the computer program product comprises computer program code; and when the computer program code is run on a computer, the method according to any one of claims 1 to 29 is implemented.

32. A communication system, comprising:
the target network device and the source network device according to any one of claims 12 to 29; or
the target network device, the source network device, and the second network device according to any one of claims 12 to 29.
